(19) Europäisches Patentamt
European Patent Office
Office européen des brevets

(11) **EP 3 985 608 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **21202154.7**

(22) Anmeldetag: **12.10.2021**

(51) Internationale Patentklassifikation (IPC):
***G06T 7/579*** *(2017.01)*

(52) Gemeinsame Patentklassifikation (CPC):
**G06T 7/579;** G06T 2207/10152

(54) **COMPUTER-IMPLEMENTIERTES VERFAHREN ZUR ERSTELLUNG VON MEHRDIMENSIONALEN GEGENSTANDS-DATENSTRUKTUREN**

COMPUTER-IMPLEMENTED METHOD FOR CREATING MULTIDIMENSIONAL OBJECT DATA STRUCTURES

PROCÉDÉ MIS EN OEUVRE PAR ORDINATEUR PERMETTANT DE CRÉER DES STRUCTURES DE DONNÉES D'OBJETS À DIMENSIONS MULTIPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2020   AT 508882020**

(43) Veröffentlichungstag der Anmeldung:
**20.04.2022   Patentblatt 2022/16**

(73) Patentinhaber: **AIT Austrian Institute of Technology GmbH**
**1210 Wien (AT)**

(72) Erfinder:
- **TRAXLER, Lukas**
  **3842 Thaya (AT)**
- **BREUSS, Simon**
  **1160 Wien (AT)**
- **STOLC, Svorad**
  **82108 Bratislava (SK)**
- **BLASCHITZ, Bernhard**
  **1220 Wien (AT)**

(74) Vertreter: **Wildhack, Andreas**
**Wildhack & Jellinek**
**Patentanwälte OG**
**Landstraßer Hauptstraße 50**
**AT-1030 Wien (AT)**

(56) Entgegenhaltungen:
**EP-B1- 3 518 180     US-A1- 2019 254 535**

- **DANIEL SCHARSTEIN ET AL: "A Taxonomy and Evaluation of Dense Two-Frame Stereo Correspondence Algorithms", INTERNATIONAL JOURNAL OF COMPUTER VISION, Bd. 47, Nr. 1/3, 2002, Seiten 7-42, XP055074772, ISSN: 0920-5691, DOI: 10.1023/A:1014573219977**
- **TOMAS CRIVELLI ET AL: "From optical flow to dense long term correspondences", IMAGE PROCESSING (ICIP), 2012 19TH IEEE INTERNATIONAL CONFERENCE ON, IEEE, 30. September 2012 (2012-09-30), Seiten 61-64, XP032333116, DOI: 10.1109/ICIP.2012.6466795 ISBN: 978-1-4673-2534-9**

**Beschreibung**

Die Erfindung betrifft ein computer-implementiertes Verfahren zur Erstellung von mehrdimensionalen Gegenstands-Datenstrukturen für die dreidimensionale Rekonstruktion der geometrischen Struktur, insbesondere der Oberfläche, eines aufgenommenen Gegenstands gemäß Patentanspruch 1.

Aus dem Stand der Technik sind verschiedenste Verfahren bekannt, die zur Aufnahme eines bewegten Lichtfeldes von industriellen Objekten mit einer Kamera, einer Beleuchtungseinheit und einem Transportsystem und anschließender 3D-Rekonstruktion des industriellen Objekts herangezogen werden können. Die bekannten 3D-Rekonstruktionsmethoden sind jedoch anfällig für lokale Störungen und benötigen hohe Rechenleistung im Arbeitsspeicher. Wird die erforderliche Zeit und Rechenleistung reduziert, fällt die 3D-Rekonstruktion sowie die Schätzung der Tiefe der Oberfläche des aufgenommenen Gegenstands jedoch unzuverlässig und grob aus, da die Datengrundlage, die für die Rekonstruktion herangezogen wird, keine genauere Auflösung zulässt. Ein weiterer Nachteil des Stands der Technik ist, dass zwar viele Methoden zur Berechnung von Disparitäten bekannt sind, aber diese üblicherweise nicht angeben können, wie genau und zuverlässig diese Disparitäten sind.

Aufgabe der Erfindung ist es daher, ein Verfahren bereitzustellen, das einerseits eine robuste Tiefenberechnung für ein Bewegungslichtfeld ermöglicht und die Qualität der Disparitätsberechnung stabilisiert und erhöht, sowie weniger Arbeitsspeicher erfordert, und somit höhere Durchsatzraten ermöglicht und andererseits eine breitere Datengrundlage für die 3D-Rekonstruktion eines aufgenommen Gegenstands zur Verfügung stellt, sodass die 3D-Rekonstruktion wesentlich verbessert werden kann.

Die Erfindung löst diese Aufgabe bei einem computer-implementierten Verfahren zur Erstellung von mehrdimensionalen Gegenstands-Datenstrukturen für die Rekonstruktion der geometrischen Struktur, insbesondere der Oberfläche, eines aufgenommenen Gegenstands, mit den kennzeichnenden Merkmalen von Patentanspruch 1.

Erfindungsgemäß ist dabei vorgesehen,

- dass der Gegenstand und eine Bildaufnahmeeinheit entlang eines Pfads relativ zueinander bewegt werden, sodass der Gegenstand im Aufnahmebereich der Bildaufnahmeeinheit erfassbar ist,
- dass die Bildaufnahmeeinheit einen Flächensensor umfasst, wobei der Flächensensor eine Vielzahl von Sensorpixeln aufweist, die in Zeilen und Spalten angeordnet sind,
- dass der Gegenstand während der Erfassung von zumindest einer Beleuchtungseinheit mit zumindest einer Beleuchtungs-Konfiguration beleuchtet wird,
- dass die zumindest eine Beleuchtungseinheit der jeweiligen Beleuchtungs-Konfiguration, mit der insbesondere jeweils ein zugeordnetes Lichtfeld aufgenommen wird, immer dieselbe Position und Ausrichtung zur Bildaufnahmeeinheit aufweist, wenn der Gegenstand mit der jeweiligen Beleuchtungs-Konfiguration beleuchtet wird,
- dass von der Bildaufnahmeeinheit eine Sequenz von Aufnahmen erstellt wird,

  - wobei die einzelnen Aufnahmen jeweils Flächenaufnahmen des Gegenstands umfassend ausgewählte, insbesondere alle, Sensorpixel sind,
  - wobei die Aufnahmezeitpunkte für die Aufnahmen so gewählt werden, dass in zeitlich aufeinanderfolgend erstellten Aufnahmen der Sequenz der Gegenstand mit der zumindest einen Beleuchtungs-Konfiguration beleuchtet wird, und
  - wobei die einzelnen Pixel der Aufnahmen für jeden der vorgegebenen Aufnahmezeitpunkte zumindest einen Helligkeitswert für die einzelnen Gegenstandspunkte im Aufnahmebereich der Bildaufnahmeeinheit umfassen,

- dass eine Bildstapel-Datenstruktur basierend auf der Sequenz von Aufnahmen des Gegenstands erstellt wird,

  - wobei die einzelnen Einträge der Bildstapel-Datenstruktur den einzelnen Pixeln der Aufnahmen der Sequenz zugeordnet sind, wobei insbesondere vorgesehen ist, dass die einzelnen Einträge der Bildstapel-Datenstruktur jeweils einer Beleuchtungs-Konfiguration zugeordnet sind, und
  - wobei alle Einträge, die derselben Aufnahme zugeordnet sind, denselben Aufnahmeindex aufweisen, wobei der Aufnahmeindex die Position der jeweiligen Aufnahme in der Sequenz von Aufnahmen kennzeichnet, der der jeweilige Eintrag zugeordnet ist,

- wobei für eine vorgegebene Anzahl von Nachbarschaften unterschiedlicher Nachbarschaftsgrößen benachbarter Einträge, die derselben Aufnahme zugeordnet sind, benachbarte Einträge derselben Nachbarschaftsgröße von einer Anzahl von, insbesondere zumindest zwei, Aufnahmen gesucht werden,

  - deren Aufnahmeindizes vom Aufnahmeindex des ausgewählten Eintrags verschieden sind und
  - die denselben Gegenstandsbereich zeigen,

sodass derart der jeweils betrachteten Nachbarschaft benachbarter Einträge

- jeweils benachbarte Einträge zumindest einer nachfolgenden Aufnahme mit einem höheren Aufnahmeindex und/oder
- jeweils benachbarte Einträge zumindest einer vorhergehenden Aufnahme mit einem niedrigeren Aufnahmeindex

zugeordnet werden,

- dass für ausgewählte Aufnahmeindizes und ausgewählte Aufnahmeindex-Differenzen für die vorgegebene Anzahl verschiedener Nachbarschaftsgrößen benachbarter Einträge einer jeweils ausgewählten Aufnahme jeweils Folgendes berechnet wird:

    - ein Nachbarschafts-Vorwärts-Disparitäts-Wert, der die Disparität zwischen den benachbarten Einträgen der jeweils ausgewählten Aufnahme und den entsprechenden benachbarten Einträgen der jeweils aufgefundenen nachfolgenden Aufnahme angibt und/oder
    - ein Nachbarschafts-Rückwärts-Disparitäts-Wert, der die Disparität zwischen den benachbarten Einträgen der jeweils ausgewählten Aufnahme und den entsprechenden benachbarten Einträgen der jeweils aufgefundenen vorhergehenden Aufnahme angibt,

- dass für ausgewählte Aufnahmeindizes und ausgewählte Aufnahmeindex-Differenzen für die vorgegebene Anzahl verschiedener Nachbarschaftsgrößen benachbarter Einträge einer jeweils ausgewählten Aufnahme die derart erstellten einzelnen Nachbarschafts-Vorwärts-Disparitäts-Werte und/oder die derart erstellten einzelnen Nachbarschafts-Rückwärts-Disparitäts-Werte der einzelnen Nachbarschaftsgrößen, zu einem einzigen Vorwärts-Disparitäts-Wert und/oder einem einzigen Rückwärts-Disparitäts-Wert des jeweils ausgewählten Eintrags, insbesondere durch Mittelwertbildung, aggregiert werden,

sodass für die ausgewählten Einträge jeder ausgewählten Aufnahme ein über alle Nachbarschaftsgrößen aggregierter Vorwärts-Disparitäts-Wert und/oder Rückwärts-Disparitäts-Wert bei dem jeweiligen Aufnahmeindex und der jeweiligen Aufnahmeindex-Differenz zur Verfügung steht,

- dass für ausgewählte, insbesondere alle, Einträge der Bildstapel-Datenstruktur einzeln jeweils der Vorwärts-Disparitäts-Wert bei einem jeweiligen Aufnahmeindex mit dem Rückwärts-Disparitäts-Wert des jeweils aufgefundenen Vorwärts-Eintrags, insbesondere durch Mittelwertbildung, aggregiert wird und derart ein Disparitäts-Wert für den jeweiligen Eintrag erstellt wird, und
- dass für die derart ermittelten Disparitäts-Werte eine Gegenstands-Datenstruktur, insbesondere ein Tensor, für den aufgenommenen Gegenstand auf Grundlage der Disparitäts-Werte der Einträge der Bildstapel-Datenstruktur ausgewählter, insbesondere aller, Aufnahmeindizes erstellt wird,

    - wobei die jeweilige Gegenstands-Datenstruktur eine Anzahl an Grund-Einträgen aufweist, wobei jeder Grund-Eintrag mit einem Teil, insbesondere der Oberfläche, des aufgenommenen Gegenstands korrespondiert,
    - wobei jeder Grund-Eintrag der Gegenstands-Datenstruktur einem Gegenstandsbereich des aufgenommenen Gegenstands zugeordnet ist,
    - wobei die einzelnen Disparitäts-Werte der Einträge der Bildstapel-Datenstruktur über deren jeweils zugeordneten Aufnahmeindex den Grund-Einträgen der Gegenstands-Datenstruktur zugeordnet werden, und
    - wobei die Disparitäts-Werte ausgewählter, vorzugsweise aller, Einträge derjenigen Aufnahmen der Bildstapel-Datenstruktur, die den jeweiligen Gegenstandsbereich zeigen, insbesondere durch Mittelwertbildung, aggregiert werden, sodass jedem Grund-Eintrag der Gegenstands-Datenstruktur zumindest ein Disparitäts-Wert zugeordnet wird.

Durch diese erfindungsgemäßen Merkmale stehen einerseits im Vergleich zu bekannten Verfahren wesentlich umfangreichere Information aus mehreren Lichtfeldern, die durch die unterschiedlichen Beleuchtungs-Konfigurationen erzeugt werden, zur Verfügung, was die Zuverlässigkeit der 3D-Rekonstruktion wesentlich erhöht. Durch die unterschiedlichen, variierenden Beleuchtungs-Konfigurationen wird weiters eine robuste Tiefenberechnung für das aufgenommene Bewegungslichtfeld ermöglicht.

Weiters werden durch die schrittweise Berechnung der Disparitäten ausgehend von Nachbarschafts-Vorwärts- und/oder -Rückwärts-Disparitäts-Werten von verschieden großen Nachbarschaften benachbarter Einträge bis hin zu einem einzelnen Disparitäts-Wert in der Gegenstands-Datenstruktur Ausreißer zuverlässig korrigiert und die Qualität der Disparitätsberechnung wird auf diese Weise wesentlich verbessert.

Durch die Erstellung der erfindungsgemäßen Gegenstands-Datenstruktur wird außerdem einerseits weit weniger Arbeitsspeicher benötigt, was wiederum zu höheren Durchsatzraten führt, und andererseits stehen Disparitäten für jede der Beleuchtungs-Konfigurationen zur Verfügung, was eine nachfolgende 3D-Rekonstruktion des aufgenommenen Gegenstands auf Basis der Gegenstands-Datenstruktur wesentlich zuverlässiger und exakter macht.

Unter einer "Beleuchtungs-Konfiguration" wird im Folgenden verstanden, dass ein Beleuchtungskörper mit spezifischen Eigenschaften auf den Gegenstand einstrahlt und den Gegenstand beleuchtet. Dabei ist das der jeweiligen Beleuchtung-Konfiguration zugeordnete Lichtfeld in seiner Position und Ausrichtung zur Bildaufnahmeeinheit immer dasselbe, wann immer der Gegenstand mit der jeweiligen Beleuchtungs-Konfiguration beleuchtet wird. Bei diesen Eigenschaften kann es sich beispielsweise um eine spezifische Beleuchtungs-Richtung und/oder eine spezifische Beleuchtungsfarbe handeln.

Beispielsweise kann eine Beleuchtungseinheit, etwa umfassend eine Reihe von LEDs in einer festen Entfernung und aus einer festen Richtung relativ zur Bildaufnahmeeinheit einen Gegenstand beleuchten. Die Konfiguration soll das Ein- und Ausschalten der Beleuchtungseinheit, insbesondere in hoher Frequenz ermöglichen, sodass etwa zwei Beleuchtungs-Konfigurationen zu einer Kamera vorhanden sein können, die aber abwechselnd den Gegenstand beleuchten.

Unter einer Nachbarschaft benachbarter Einträge wird im Folgenden verstanden, ausgehend von einem jeweils betrachteten Eintrag eine wählbare Anzahl unmittelbar angrenzender Einträge zusammengefasst werden. Diese benachbarten Einträge werden dann als Nachbarschaft bezeichnet.

Dies bedeutet beispielsweise, dass für einen Eintrag der Bildstapel-Datenstruktur, der jeweils mit einem Pixel korrespondiert, das üblicherweise auf einem rechteckigen Sensor in einer bestimmten Pixelzeile und einer Pixelspalte des Sensors liegt, die unmittelbar anliegenden Pixel bzw. die entsprechenden Einträge der Bildstapel-Datenstruktur, etwa in derselben Spalte eines davor, eines darüber und eines darunter in der Pixelzeile eines davor und eines danach und die diagonal angrenzenden Pixel zur Nachbarschaft gezählt werden.

Unter unterschiedlichen Nachbarschaftsgrößen bzw. unterschiedlichen Größen von Nachbarschaften wird im Folgenden verstanden, wie weit um einen Eintrag der Bildstapel-Datenstruktur bzw. ein Pixel herum Einträge zu einer Nachbarschaft zusammengefasst werden.

Beispielsweise können als Nachbarschaftsgröße 1 etwa die 8 unmittelbar angrenzenden Pixel (davor, danach, darüber, darunter und die 4 diagonal angrenzenden Pixel), als Nachbarschaftsgröße 2 die 24 anliegenden Pixel und als die Nachbarschaftsgröße n die $(2*n+1)^2-1$ angrenzenden Pixel festgelegt werden.

Unter der Disparität wird im Folgenden verstanden, wie weit ein und derselbe unbewegte Objektpunkt in zwei unterschiedlichen Aufnahmen mit unterschiedlichem Kamerazentrum in den Bildern versetzt erscheint; diese Disparität ist ein Maß für den Abstand zwischen Objektpunkt und Kamerazentren und kann in einem kalibrierten System in Tiefe umgerechnet werden. Bewegt sich ein Objekt vor einer starren Kamera, so erscheint der Objektpunkt in den Aufnahmen an unterschiedlicher Stelle. Ein Teil der Bewegung des Objektpunktbildes in den Aufnahmen entfällt auf die Bewegung des Objektes, ein anderer Teil auf seinen Abstand zur Kamera. Bei bekannter Bewegungsrichtung und -geschwindigkeit kann der Teil der Objektpunktdifferenz, der auf die Bewegung zurückzuführen ist, leicht in eine Verschiebung im Bild umgerechnet werden, der verbleibende Teil ist die Disparität eines bewegten Objektpunktes.

Gemäß einer vorteilhaften Ausführungsform der Erfindung kann vorgesehen sein,

- dass für ausgewählte Aufnahmeindizes und ausgewählte Aufnahmeindex-Differenzen für die vorgegebene Anzahl verschiedener Nachbarschaftsgrößen benachbarter Einträge einer jeweils ausgewählten Aufnahme zusätzlich jeweils Folgendes berechnet wird:

  - ein Nachbarschafts-Vorwärts-Konfidenz-Wert, der die Konfidenz des zwischen den benachbarten Einträgen der jeweils ausgewählten Aufnahme und den entsprechenden benachbarten Einträgen der jeweils aufgefundenen nachfolgenden Aufnahme berechneten Nachbarschafts-Vorwärts-Disparitäts-Wert angibt und/oder
  - ein Nachbarschafts-Rückwärts-Konfidenz-Wert, der die Konfidenz des zwischen den benachbarten Einträgen der jeweils ausgewählten Aufnahme und den entsprechenden benachbarten Einträgen der jeweils aufgefundenen vorangehenden Aufnahme berechneten Nachbarschafts-Rückwärts-Disparitäts-Wert angibt,

  wobei die Konfidenz jeweils ein skalarer Wert für jeden Eintrag und jede Nachbarschaftsgröße bei der jeweiligen Aufnahmeindex-Differenz ist,

- dass für jeden Aufnahmeindex und jede Aufnahmeindex-Differenz für die vorgegebene Anzahl verschiedener Nachbarschaftsgrößen benachbarter Einträge einer jeweils ausgewählten Aufnahme die derart erstellten einzelnen Nachbarschafts-Vorwärts-Konfidenz-Werte und/oder die derart erstellten einzelnen Nachbarschafts-Rückwärts-Konfidenz-Werte der einzelnen Nachbarschaftsgrößen, zu einem einzigen Vorwärts-Konfidenz-Wert und/oder einem einzigen Rückwärts-Konfidenz-Wert des jeweils ausgewählten Eintrags, insbesondere durch Mittelwertbildung, aggregiert werden,
  sodass für die ausgewählten Einträge jeder ausgewählten Aufnahme ein über alle Nachbarschaftsgrößen aggregierter Vorwärts-Konfidenz-Wert und/oder Rückwärts-Konfidenz-Wert bei dem jeweiligen Aufnahmeindex und der jeweiligen Aufnahmeindex-Differenz zur Verfügung steht,

- dass für ausgewählte, insbesondere alle, Einträge der Bildstapel-Datenstruktur einzeln jeweils der Vorwärts-Konfidenz-Wert bei einem jeweiligen Aufnahmeindex mit dem Rückwärts-Konfidenz-Wert des jeweils aufgefundenen Vorwärts-Eintrags, insbesondere durch Mittelwertbildung, aggregiert wird und derart ein Konfidenz-Wert für den jeweiligen Eintrag erstellt wird, und

- dass für die derart ermittelten Konfidenz-Werte eine Gegenstands-Konfidenz-Datenstruktur, insbesondere ein Tensor, für den aufgenommenen Gegenstand auf Grundlage der Konfidenz-Werte der Einträge der Bildstapel-Datenstruktur ausgewählter, insbesondere aller, Aufnahmeindizes erstellt wird, wobei der Aufbau der Gegenstands-Konfidenz-Datenstruktur dem Aufbau der Gegenstands-Datenstruktur entspricht,

  - wobei die einzelnen Konfidenz-Werte der Einträge der Bildstapel-Datenstruktur über den jeweils zugeordneten Aufnahmeindex den Grund-Einträgen der Gegenstands-Konfidenz-Datenstruktur zugeordnet werden, und

  - wobei die Konfidenz-Werte ausgewählter, vorzugsweise aller, Einträge derjenigen Aufnahmen der Bildstapel-Datenstruktur, die den jeweiligen Gegenstandsbereich zeigen, insbesondere durch Mittelwertbildung, aggregiert werden, sodass jedem Grund-Eintrag der Gegenstands-Konfidenz-Datenstruktur zumindest ein Konfidenz-Wert zugeordnet wird.

Durch diese erfindungsgemäßen Merkmale ist es optional möglich, ein Konfidenz-Maß für die Disparitätsberechnung anzugeben, was eine weiter verbesserte Aussage über die Zuverlässigkeit einer 3D-Rekonstruktion, die auf Grundlage der Gegenstands-Datenstruktur erstellt wurde, ermöglicht.

Unter einer "Konfidenz" wird im Folgenden ein skalarer Wert etwa von 0 bis 100 verstanden, der die Wahrscheinlichkeit dafür angibt, dass eine berechnete Disparität beispielsweise pro Nachbarschaftsgröße und pro Eintrag der Bildstapel-Datenstruktur bzw. pro Pixel derjenigen Aufnahme, der der jeweilige Eintrag zugeordnet ist, tatsächlich richtig ist. Hier würde beispielsweise ein Konfidenzwert 100 bedeuten, dass die angegebene Disparität absolut sicher und ein Konfidenzwert 0, dass der angegeben Disparitätswert absolut unsicher ist. Wenn sich etwa die berechneten Disparitätswerte für einen Objektpunkt aufgrund verschiedener Berechnungsmethoden widersprechen, kann der zugehörige Konfidenzwert reduziert werden. Vorteil der Angaben eines Konfidenzwertes ist, dass bei der weiteren Verwendung des Disparitätswertes (oder der daraus abgeleiteten Tiefe) besser eingeschätzt werden kann, wie sehr darauf basierenden Auswertungen vertraut werden kann.

Gemäß einer weiteren vorteilhaften Ausführungsform der Erfindung kann vorgesehen sein,

- dass der Gegenstand während der Erfassung von der zumindest einer Beleuchtungseinheit abwechselnd mit zumindest zwei verschiedenen Beleuchtungs-Konfigurationen, insbesondere aus zumindest zwei verschiedenen Beleuchtungs-Richtungen, beleuchtet wird,
- dass die Aufnahmezeitpunkte für die Aufnahmen so gewählt werden, dass in zeitlich aufeinanderfolgend erstellten Aufnahmen der Sequenz der Gegenstand abwechselnd mit den unterschiedlichen Beleuchtungs-Konfigurationen beleuchtet wird,
- dass die einzelnen Einträge der Bildstapel-Datenstruktur jeweils einer der Beleuchtungs-Konfigurationen zugeordnet sind,
- dass benachbarte Einträge derselben Nachbarschaftsgröße von einer Anzahl von, insbesondere zumindest zwei, Aufnahmen gesucht werden, die mit derselben Beleuchtungs-Konfiguration erstellt wurden und
- dass

  - für die ermittelten Disparitäts-Werte und/oder für die ermittelten Konfidenz-Werte für jede Beleuchtungs-Konfiguration einzeln, jeweils eine Gegenstands-Datenstruktur und/oder eine Gegenstands-Konfidenz-Datenstruktur erstellt wird,
    und/oder
  - dass die Gegenstands-Datenstruktur und/oder die Gegenstands-Konfidenz-Datenstruktur Grund-Einträge für jede der Beleuchtungs-Konfigurationen umfasst, wobei den einzelnen Grund-Einträgen der jeweiligen Beleuchtungs-Konfiguration die Disparitäts-Werte und/oder die Konfidenz-Werte ausgewählter, vorzugsweise aller, Einträge derjenigen Aufnahmen der Bildstapel-Datenstruktur, die den jeweiligen Gegenstandsbereich zeigen und mit derselben Beleuchtungs-Konfiguration erstellt wurden, insbesondere durch Mittelwertbildung, aggregiert zugeordnet werden.

Durch diese Vorgehensweise ist es vorteilhafterweise möglich, jeweils separate Lichtfelder für jede Beleuchtungs-Konfiguration aufzunehmen und somit auch separate Gegenstands-Datenstrukturen und ggf. separate Gegenstands-Konfidenz-Datenstrukturen für jede Beleuchtungs-Konfiguration zu erstellen, was die zur Verfügung stehende Datengrundlage wesentlich verbessert und somit auch eine etwaige folgende 3D-Rekonstruktion des aufgenommenen Gegenstands wesentlich zuverlässiger macht.

Gemäß einer weiteren vorteilhaften Ausführungsform der Erfindung kann vorgesehen sein,

- dass für ausgewählte Einträge der Bildstapel-Datenstruktur jeweils überprüft wird, ob bei einem jeweiligen Aufnahmeindex und bei einer jeweiligen Aufnahmeindex-Differenz der Vorwärts-Disparitäts-Wert mit dem Rückwärts-Disparitäts-Wert übereinstimmt und
- im Fall, dass keine Übereinstimmung vorliegt, der Vorwärts-Konfidenz-Wert und der Rückwärts-Konfidenz-Wert für den jeweiligen Eintrag, insbesondere durch Reduktion des Konfidenzwerts, angepasst werden.

Durch diese Vorgehensweise ist es vorteilhafterweise möglich, Inkonsistenzen zwischen den Vorwärts- und Rückwärts-Disparitäts-Werten, die auf das Auftreten von Ausreißern hindeuten können, zu berücksichtigen, indem die entsprechenden Vorwärts- und Rückwärts-Konfidenz-Werte reduziert werden.

Gemäß einer weiteren vorteilhaften Ausführungsform der Erfindung kann weiters vorgesehen sein, dass bei der Suche nach benachbarten Einträgen derselben Nachbarschaftsgröße nach zumindest einem Vorwärts-Eintrag mit einem um eine vorgegebene Aufnahmeindex-Differenz höheren Aufnahmeindex und zumindest einem Rückwärts-Eintrag mit einem um eine vorgegebene Aufnahmeindex-Differenz niedrigeren Aufnahmeindex gesucht wird, wobei insbesondere vorgesehen ist, dass die vorgegeben Aufnahmeindex-Differenz ein Vielfaches der Anzahl an Beleuchtungs-Konfigurationen ist.

Bei einem erfindungsgemäßen Verfahren, bei dem die erforderliche Rechenzeit und Rechnerleistung vorteilhafterweise weiter reduziert werden können, kann vorgesehen sein, dass die Konfidenzen zwischen den benachbarten Einträgen der jeweils ausgewählten Aufnahme und den entsprechenden benachbarten Einträgen der jeweils aufgefundenen vorhergehenden und/oder nachfolgenden Aufnahme mittels Kreuzkorrelation berechnet werden.

Bei einem erfindungsgemäßen Verfahren, bei dem die erforderliche Rechenzeit und Rechnerleistung vorteilhafterweise weiter reduziert werden können, kann vorgesehen sein, dass der Transport entlang des Pfads einem geradlinigen Transport entlang einer Transportrichtung entspricht. Dabei kann insbesondere vorgesehen sein, dass zumindest eine erste Beleuchtungseinheit und eine zweite Beleuchtungseinheit vorgesehen sind, wobei die Beleuchtungseinheiten normal zur Transportrichtung und parallel zur Transportebene ausgerichtet sind.

Auf diese Weise kann das verwendete Aufnahmesystem, das für den relativen Transport von Bildaufnahmeeinheit und Gegenstand zueinander, sowie für die verschiedenen Beleuchtungs-Konfigurationen zuständig ist, besonders einfach und kompakt gehalten werden. Weiters kann durch diese Ausgestaltung ein einfacher Einsatz eines erfindungsgemäßen Verfahrens in einem industriellen Umfeld sichergestellt werden, da ein Transport entlang eines geradlinigen Pfades auch genau den Bedingungen entspricht, die etwa in der Industrie bei Transport mit einem Förderband vorherrschen, wo zu inspizierende Produkte üblicherweise an einer Kamera vorbeibewegt werden.

Gemäß einer weiteren vorteilhaften Ausführungsform der Erfindung kann vorgesehen sein, dass der Transport entlang des Pfads einem mäandrierenden Transport über eine vorgegebene ebene Fläche entspricht. Auf diese Weise ist es besonders effizient möglich, beim Vorbeifahren an früher bereits besuchten Stellen eines untersuchten Gegenstands, an denen entsprechende Bildüberschneidungen auftreten, nicht nur in einer Richtung, z.B. der x-Richtung, zu matchen, sondern auch in einer zweiten Richtung, z.B. der y-Richtung. Auf diese Weise ist es möglich, in der Sequenz von Aufnahmen viele verschiedene Nachbarschaften unterschiedlicher Größen, die denselben Gegenstandsbereich zeigen, zu ermitteln und die entsprechenden Disparitäten zu berechnen. Dies ist insbesondere dann ein Vorteil, wenn man einen Gegenstand aufnehmen möchte, der zu groß für eine einzige Aufnahme ist, der aber trotzdem vollflächig aufgenommen werden soll.

Gemäß einer weiteren vorteilhaften Ausführungsform der Erfindung kann vorgesehen sein, dass der Transport entlang des Pfads einem Transport über eine gekrümmte Fläche, insbesondere über eine starre 2-parametrige Fläche, im Raum entspricht. Auf diese Weise ist es besonders effizient möglich, gekrümmt bzw. gebogene Oberflächen wie Zylinderoberflächen etc. zu untersuchen.

Eine besonders exakte und zuverlässige dreidimensionale Rekonstruktion eines aufgenommenen Gegenstands kann erzielt werden, wenn die Gegenstands-Datenstrukturen, insbesondere gemeinsam mit den Gegenstands-Konfidenz-Datenstrukturen, der zumindest einen Beleuchtungs-Konfiguration, insbesondere ausgewählter, vorzugsweise aller Beleuchtungs-Konfigurationen, gemeinsam für eine dreidimensionale Rekonstruktion des aufgenommenen Gegenstands herangezogen werden, wobei insbesondere vorgesehen ist, dass die Konfidenzen der bei der dreidimensionalen Rekonstruktion ermittelten Tiefen der einzelnen Gegenstandsbereiche des Gegenstands angegeben werden.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben. Der Umfang der Erfindung und ihrer Ausführungsformen wird von den angefügten Ansprüchen festgelegt.

**EP 3 985 608 B1**

Im Folgenden zeigen schematisch:

Fig. 1 Ein Ausführungsbeispiel eines Aufnahmesystems zur Durchführung eines erfindungsgemäßen Verfahrens,
Fig. 2 eine Sequenz von Aufnahmen, die für das Ausführungsbeispiel in Fig. 1 erstellt wurden,
Fig. 3 drei Aufnahmen aus Fig. 2 im Detail, wobei die Bewegung des Gegenstands, die auf den Transport des Gegenstands zwischen der Erstellung der einzelnen Aufnahmen zurückzuführen ist, herausgerechnet wurde,
Fig. 4 ein Ausschnitt aus der Gegenstands-Datenstruktur für das Ausführungsbeispiel in Fig. 1,
Fig. 5 ein schematisches Ausführungsbeispiel eines Transports entlang eines mäandrierenden Pfads,
Fig. 6 ein schematisches Ausführungsbeispiel eines Transports entlang einer gekrümmten Fläche.

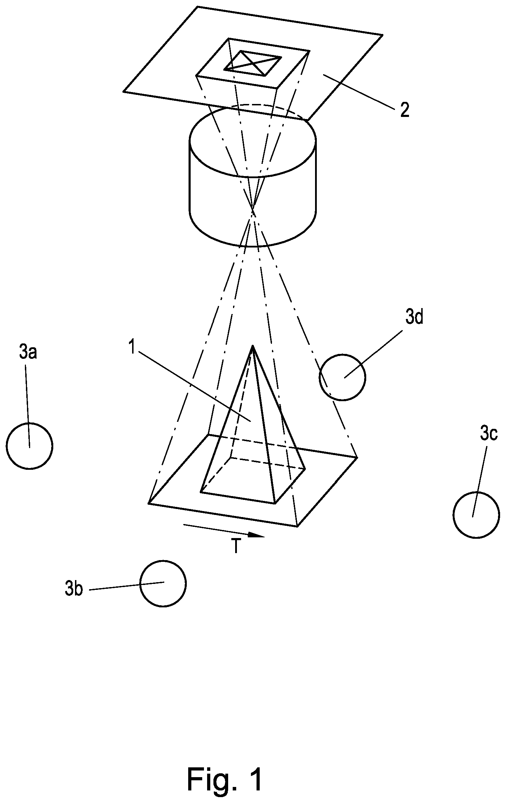

Fig. 1 zeigt ein Ausführungsbeispiel eines Aufnahmesystems zur Durchführung eines erfindungsgemäßen Verfahrens umfassend eine Bildaufnahmeeinheit 2 mit einem Flächensensor, vier Beleuchtungseinheiten 3a, 3b, 3c und 3d, sowie einen aufzunehmenden, pyramidenförmigen Gegenstand 1, der durch den Aufnahmebereich der Bildaufnahmeeinheit 2 entlang eines Pfads T bewegt wird. Im Ausführungsbeispiel in Fig. 1 handelt es sich beim Transport entlang des Pfads T zwar um einem geradlinigen Transport entlang einer Transportrichtung, dies ist bei einem erfindungsgemäßen Verfahren jedoch nicht zwingend erforderlich und es sind auch andere Pfade T möglich, worauf weiter unten noch detaillierter eingegangen wird.

Im Ausführungsbeispiel in Fig. 1 wird der Gegenstand 1 von einer Transporteinheit durch den Aufnahmebereich der Bildaufnahmeeinheit 2 transportiert. Bei einer derartigen Transporteinheit kann es sich z.B. um ein Förderband oder einer Linearbühne mit einer, zwei oder drei Achsen handeln. Bei 2 Achsen spricht man von XY-Tisch, bei 3 von XYZ-Tisch oder Mehrachspositioniersystem. Es ist jedoch für ein erfindungsgemäßes Verfahren nicht erheblich, ob der Gegenstand 1 relativ zu Bildaufnahmeeinheit 2 transportiert wird, oder umgekehrt.

Der Flächensensor der Bildaufnahmeeinheit 2 weist eine Vielzahl von Sensorpixeln auf, die in Zeilen und Spalten angeordnet sind.

Generell kommt ein erfindungsgemäßes Verfahren mit einer einzelnen Beleuchtungseinheit 3 und einer damit verbundenen Beleuchtungs-Konfiguration aus, mit einer größeren Anzahl an Beleuchtungseinheiten bzw. Beleuchtungs-Konfigurationen kann die Datengrunde jedoch wesentlich verbessert werden. Im Ausführungsbeispiel in Fig. 1 werden vier kugelförmige Beleuchtungseinheiten 3a, ..., 3d eingesetzt. Ein erfindungsgemäßes Verfahren kann jedoch auch mit einer größeren oder kleineren Anzahl an Beleuchtungseinheiten 3, sowie anders, z.B. länglich ausgebildeten, Beleuchtungseinheiten 3 durchgeführt werden. Beispielsweise kann es sich auch um eine ringförmige Beleuchtungseinheit 3 mit verschieden aktivierbaren Segmenten handeln. Alternativ dazu kann auch eine einzelne Beleuchtungseinheit 3 vorgesehen sein, die z.B. auf einem Schwenkarm oder einer sonstigen Transportvorrichtung um die Bildaufnahmeeinheit 2 herumgeführt wird.

Die Bildaufnahmeeinheit 2 und das den einzelnen Beleuchtungs-Konfigurationen zugeordnete Lichtfeld, das von den Beleuchtungseinheit 3a, ..., 3d ausgeht, stehen in einer für die jeweilige Beleuchtungs-Konfiguration spezifischen, zeitlich unveränderlichen, Position und Ausrichtung zueinander. D.h., immer dann, wenn mit Beleuchtungseinheit 3a beleuchtet wird, nimmt diese die für die entsprechende Beleuchtungs-Konfiguration spezifische Position ein, d.h. vereinfacht gesprochen, immer dann, wenn mit Beleuchtungseinheit 3a beleuchtet wird, steht die Beleuchtungseinheit an derselben Position. Dabei ist es jedoch unerheblich, ob z.B. verschiedene Beleuchtungs-Konfigurationen durch verschiedene Beleuchtungseinheiten 3 erzeugt werden, oder ob z.B. mittels einer Beleuchtungseinheit 3 verschiedene Beleuchtungs-Konfigurationen erzeugt werden, indem diese zwischen der Erstellung der einzelnen Aufnahmen F hin- und herbewegt wird.

Im Ausführungsbeispiel in Fig. 1 sind zwei der Beleuchtungseinheiten 3a, 3c in Transportrichtung gesehen vor und hinter dem Aufnahmebereich der Bildaufnahmeeinheit, sowie zwei Beleuchtungseinheiten 3b, 3c seitlich zum Aufnahmebereich angeordnet.

Jede dieser Beleuchtungseinheiten 3a, ..., 3d beleuchtet abwechselnd die Szene bzw. den aufzunehmenden Gegenstand 1 mit ihrer jeweiligen Beleuchtungs-Konfiguration. Im Ausführungsbeispiel handelt es sich bei den Beleuchtungs-Konfigurationen um vier verschiedene Beleuchtungsrichtungen $C_1$, ..., $C_4$. Dies bedeutet, dass der Gegenstand 1 im Ausführungsbeispiel während der Erfassung abwechselnd aus vier verschiedenen Beleuchtungs-Richtungen $C_1$, ..., $C_4$ beleuchtet wird.

Bei den verschiedenen Beleuchtungs-Konfigurationen kann es sich jedoch auch z.B. um unterschiedlich farbige Beleuchtungen handeln.

Im Folgenden werden die Bildaufnahmeeinheit 2, sowie die Beleuchtungseinheiten 3a, ..., 3d der Einfachheit halber unter dem Begriff Sensorkopf zusammengefasst. Relativ zu diesem Sensorkopf bewegt sich ein zu inspizierendes Objekt, d.h. ein aufzunehmender Gegenstand 1.

Ob der Sensorkopf starr bleibt und der Gegenstand 1, etwa durch eine Linearbühne, ein Mehrachspositioniersystem oder einen Roboter, bewegt wird oder umgekehrt, spielt für die Durchführung eines erfindungsgemäßen Verfahrens keine Rolle. Vorteilhaft ist lediglich, dass rektifizierte Aufnahmen F erstellt werden können, d.h. dass die Bewegung des Gegenstands 1 relativ zum Sensorkopf entlang einer bestimmbaren Bahn bzw. eines bestimmten Pfads T erfolgt, was zB bei einer Linearachse sicher der Fall ist. Unter Rektifizierung der Aufnahmen F versteht man einerseits das Herausrechnen der intrinsischen Kameraparameter wie zB Linsenverzerrung, andererseits das Umrechnen auf Aufnahmen, in denen die Bewegung des Gegenstands 1 im Bild entlang gerader Linien, die idealerweise parallel zu einer Bildkante liegen, erscheint.

Während der Bewegung des Gegenstands 1 vor dem Sensorkopf werden als erster Schritt eines erfindungsgemäßen Verfahrens zunächst Flächenbilder bzw. Aufnahmen F einer Gesamtszene, die sich im Aufnahmebereich der Bildaufnahmeeinheit 2 befindet und zumindest Teile des Gegenstands 1 umfasst, erstellt. Diese Gesamtszene kann beliebig breit und hoch sein, die Aufnahme F sind dabei z.B. immer so breit und hoch wie der Flächensensor der Bildaufnahmeeinheit 2. Alternativ zur Verwendung aller Sensorpixel kann z.B. auch ein bestimmter Sensorpixelbereich für alle Aufnahmen F vorgegeben werden. Sequenz bzw. die Abfolge, wie die Aufnahmen F erstellt werden, wird dabei mit den Aufnahmen F hinterlegt. Im Ausführungsbeispiel werden die Aufnahmen F dazu z.B. fortlaufend mit $F_1$, $F_2$, $F_3$, $F_4$ etc nummeriert. Die Aufnahmen $F_1$, ..., $F_{12}$ werden an eine Verarbeitungseinheit (nicht in Fig. 1 dargestellt) übermittelt.

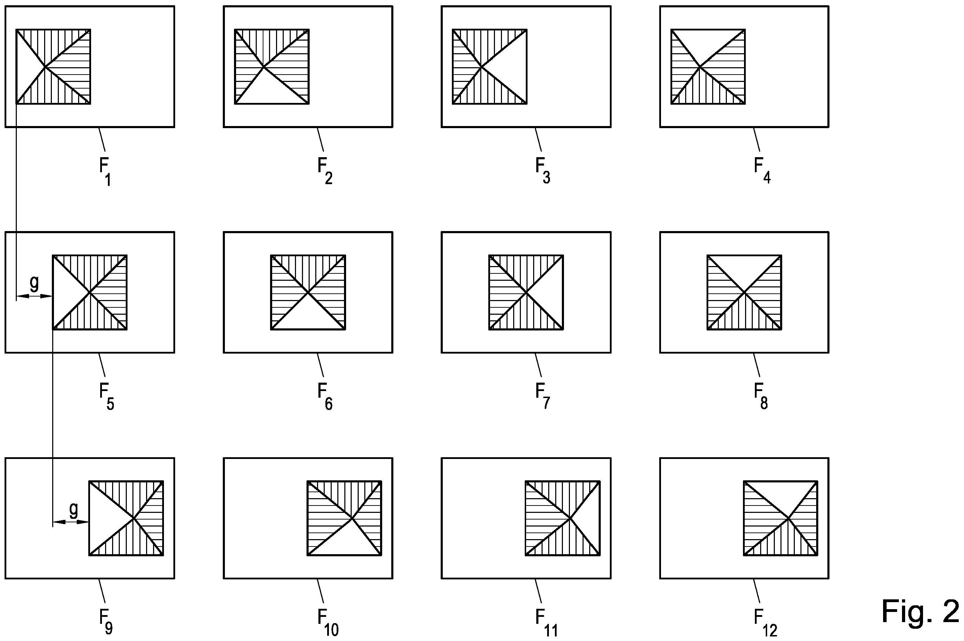

**Fig. 2** zeigt schematisch die im Ausführungsbeispiel erstellte Sequenz von Aufnahmen $F_1$, ..., $F_{12}$, die jeweils Flächenaufnahmen des Gegenstands 1 darstellen, die mit allen Sensorpixeln der Bildaufnahmeeinheit 2 erstellt wurden.

Die Aufnahmezeitpunkte der Aufnahmen $F_1$, ..., $F_{12}$ sind so gewählt, dass die Aufnahmen $F_1$, ..., $F_{12}$ abwechselnd von einer anderen der Beleuchtungseinheiten 3a, ..., 3d beleuchtet werden. Nach jedem Wechsel der Beleuchtungs-Konfiguration, d.h. im Ausführungsbeispiel nach jedem Wechsel der Beleuchtungs-Richtung $C_1$, ..., $C_4$, wird eine Aufnahme $F_1$, ..., $F_{12}$ gemacht. Während diese vier Beleuchtungs-Konfigurationen durchgeschaltet werden, bewegt sich der Gegenstand 1 im Ausführungsbeispiel der Einfachheit halber nicht. Dies ist bei einem erfindungsgemäßen Verfahren jedoch nicht zwingend erforderlich und eine Bewegung des Gegenstands 1 während die Beleuchtungs-Konfigurationen durchgeschaltet werden, könnte alternativ dazu rechnerisch berücksichtigt werden.

Die Bahn des Gegenstandes 1 durchs Bild etwa von Aufnahme $F_1$ zu $F_5$ oder von $F_5$ zu $F_9$ ist aufgrund einer vorab durchgeführten Kalibrierung des Aufnahmesystems als bekannt vorauszusetzen und kann aufgrund der Rektifizierung als achsenparallel angenommen werden, wodurch korrespondierende Nachbarschaften entlang derselben Bildzeilen liegen.

Ein derartiges Kalibrierverfahren ist z.B. in der europäischen Patentanmeldung EP 3561772 A1 beschrieben. Dort wird zwar ein anderer Aufnahmefall behandelt, nämlich, dass anstatt der Flächenaufnahmen $F_1$, ..., $F_{12}$ jeweils Zeilenaufnahmen aus einem solchen Flächensensor ausgelesen werden, aber die dort vorgenommene Umrechnung der Aufnahmen auf eine virtuelle Sensorebene, die als eine Koordinatenrichtung die Transportrichtung hat, kann ebenfalls angewandt werden. Im Gegensatz zur Patentmeldung EP 3561772 A1 erfolgt im gezeigten Ausführungsbeispiel aber auch einen Transport in zwei Richtungen, wodurch die zweite Koordinatenrichtung nicht frei wählbar, sondern schon festgelegt ist. Wesentlich ist, dass perspektivische Verzerrungen, die aus einer Nicht-Parallelität von Sensorebene und Transportebene (oder -richtung) entstehen, vor dem Berechnen der Disparität herausgerechnet werden müssen, um eine effiziente Gegenstands-Datenstruktur 5 erstellen zu können. Wenn die Voraussetzung einer Rektifizierung mit transportrichtungsparallelen Achsen nicht erfüllt werden kann, kann trotzdem eine Gegenstands-Datenstruktur 5 z.B. mittels bekannter SLAM-Algorithmen aufgebaut werden, die aber mehr Arbeitsspeicher benötigt und somit üblicherweise mehr Rechenleistung erfordert

Die einzelnen Pixel der Aufnahmen $F_1$, ..., $F_{12}$ umfassen für jeden der vorgegebenen Aufnahmezeitpunkte zumindest einen Helligkeitswert für die einzelnen Gegenstandspunkte im Aufnahmebereich der Bildaufnahmeeinheit 2. In den Aufnahmen F, bis $F_4$ sowie $F_9$ bis $F_{12}$ sieht man eine perspektivische Verzerrung der Pyramide bzw. des pyramidenförmigen Gegenstands 1. Diese Verzerrungen geben Aufschluss über die Disparitäten der einzelnen Gegenstandspunkte des Gegenstands 1.

Die Aufnahmen $F_1$, ..., $F_{12}$ werden immer in derselben Reihenfolge abwechselnd von den Beleuchtungseinheiten 3a, ..., 3d beleuchtet, wie dies etwa die von der Bildaufnahmeeinheit 2 erstellten Aufnahmen $F_1$ bis $F_4$ ersichtlich ist, die den Gegenstand 1 jeweils aus unterschiedlicher Richtung beleuchtet zeigen. Der beleuchtete Teil des Gegenstands 1 ist in den schematisch dargestellten Aufnahmen $F_1$, ..., $F_{12}$in Fig. 2 jeweils schraffiert dargestellt.

Insbesondere bedeutet das, dass bei vier Beleuchtungs-Richtungen $C_1$, ..., $C_4$ jede vierte Aufnahme F aus derselben Beleuchtungs-Richtung C, d.h. mit derselben Beleuchtungseinheit 3, beleuchtet wird. Jede neue Beleuchtungs-Konfiguration erweitert das Lichtfeld, d.h. obwohl mit einer einzigen Beleuchtungs-Konfiguration das Lichtfeld zwar ausreichend abgesampelt wäre, kann mit einer zweiten Beleuchtungs-Konfiguration wesentlich mehr Information gewonnen werden, die dazu führt, dass eine anschließende dreidimensionale Rekonstruktion des Gegenstands 1 basierend auf den so gewonnenen Daten wesentlich exakter und umfassender erfolgen kann.

Basierend auf der Sequenz von Aufnahmen $F_1$, ..., $F_{12}$ des Gegenstands 1 wird von der Verarbeitungseinheit eine Bildstapel-Datenstruktur BD erstellt. Die einzelnen Einträge E, G, der Bildstapel-Datenstruktur sind den einzelnen Pixeln der Aufnahmen $F_1$, ..., $F_{12}$ der Sequenz zugeordnet, sowie jeweils einer der Beleuchtungs-Konfigurationen. Alle Einträge E, G die derselben Aufnahme F zugeordnet sind, weisen denselben Aufnahmeindex a auf, wobei der Aufnahmeindex $a_1$, ..., $a_{12}$ die Position der jeweiligen Aufnahme F in der Sequenz von Aufnahmen $F_1$, ..., $F_{12}$ kennzeichnet,

der der jeweilige Eintrag E, G zugeordnet ist. Auf diese Weise kann für jeden Eintrag E, G der Bildstapel-Datenstruktur BD jederzeit nachvollzogen werden, auf welcher Aufnahme F er basiert und an welcher Position in der Sequenz von Aufnahmen $F_1$, ..., $F_{12}$ sich diese Aufnahme F befindet.

Für jede dieser Aufnahmen $F_1$, ..., $F_{12}$ werden im Ausführungsbeispiel pro Eintrag E, G der Bildstapel-Datenstruktur BD, d.h. pro Pixelposition der jeweiligen Aufnahmen F, eine frei vorgebbare Anzahl von benachbarten Einträgen zu einer Nachbarschaft 4 zusammengefasst. im Ausführungsbeispiel werden ausgehend von einem jeweils betrachteten Eintrag E(z,s), G(z,s) die acht unmittelbar benachbarten Einträge zu einer Nachbarschaft 4 von der Verarbeitungseinheit zusammengefasst.

Für die Nachbarschaftsgröße k=1 werden also die acht unmittelbar benachbarten Einträge bzw. Pixel zu einer Nachbarschaft 4 zusammengefasst. In Tabelle 1 sind die betreffenden benachbarten Einträge 4b für den betrachteten Eintrag E(z,s) der Aufnahme $F_5$ zusammengefasst, wobei z für die betreffende Zeile und s für die betreffende Spalte des betrachteten Eintrags E(z,s) in der Bildstapel-Datenstruktur BD steht. Diese benachbarten Einträge der Aufnahme $F_5$ werden im Folgenden vereinfacht als Nachbarschaft 4b der Aufnahme $F_5$ bezeichnet.

Tabelle 1: benachbarten Einträge ausgehend vom Eintrag E(z,s) bei der Nachbarschaftsgröße k=1

| E(z-1,s-1) | E(z-1,s) | E(z-1,s+1) |
|---|---|---|
| E(z,s-1) | E(z,s) | E(z,s+1) |
| E(z+1,s-1) | E(z+1,s) | E(z+1,s+1) |

In Tabelle 2 sind die betreffenden benachbarten Einträge für einen anderen Eintrag G(z,s), der der Aufnahme $F_9$ zugeordnet ist, bei derselben Nachbarschaftsgröße k=1 zusammengefasst, wobei z wieder für die betreffende Zeile und s für die betreffende Spalte des betrachteten Eintrags G(z,s) in der Bildstapel-Datenstruktur BD steht. Diese benachbarten Einträge der Aufnahme $F_9$ werden im Folgenden vereinfacht als Nachbarschaft 4c der Aufnahme $F_9$ bezeichnet.

Tabelle 2: benachbarten Einträge ausgehend vom Eintrag G(z,s) bei der Nachbarschaftsgröße k=1

| G(z-1,s-1) | G(z-1,s) | G(z-1,s+1) |
|---|---|---|
| G(z,s-1) | G(z,s) | G(z,s+1) |
| G(z+1,s-1) | G(z+1,s) | G(z+1,s+1) |

Für eine frei vorgebbare Aufnahmeindex-Differenz Δa zweier Aufnahmen F, die auch "Baseline" genannt wird, für z.B. die Aufnahmen $F_1$, $F_5$ und $F_9$ wäre diese Aufnahmeindex-Differenz Δa=4, werden jeweils eine vorgegebene Anzahl k von Nachbarschaften 4 unterschiedlicher Größen (z.B. Nachbarschaften von 3x3, 5x5, Einträgen E etc) miteinander abgeglichen.

Dies bedeutet, es werden ausgehend vom ausgewählten Eintrag E(z,s) benachbarte Einträge von zumindest zwei Aufnahmen F mit derselben Nachbarschaftsgröße gesucht, deren Aufnahmeindizes a vom Aufnahmeindex $a_5$ des ausgewählten Eintrags E(z,s) verschieden sind, die mit derselben Beleuchtungs-Konfiguration erstellt wurden und die denselben Gegenstandsbereich zeigen. So wird etwa ausgehen von Nachbarschaft 4b in Aufnahme $F_5$ die Nachbarschaft 4a in Aufnahme $F_1$ gesucht. Aufgrund der Rektifizierung wurde vorausgesetzt, dass korrespondierende Pixel entlang achsenparalleler Linien gefunden werden können und wenn man jenen Teil des Abstands g entlang der Epipolarlinie, der nicht auf die Parallaxe, sondern auf den Transport zurückzuführen ist, als bekannt annehmen kann. Mittels Kreuzkorrelation oder anderer Verfahren (siehe Ausführungsbeispiel) können nun passende Nachbarschaften und damit die Disparität bestimmt werden. Dieser Vorgang ist aus der Literatur bekannt und heißt "Feature Matching" (bei zwei Bildern auch "Stereo Matching"), siehe etwa Szeliski, Richard. Computer vision: algorithms and applications. Springer Science & Business Media, 2010.

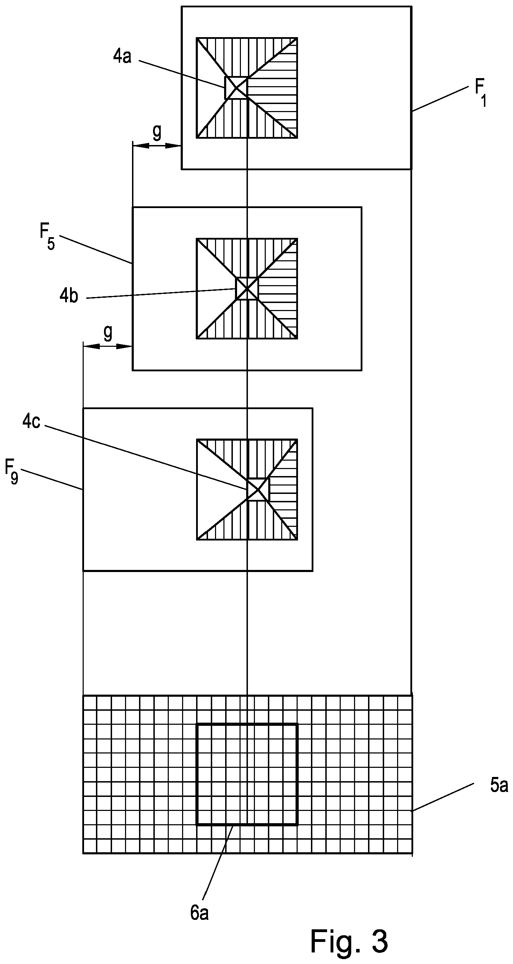

Dieser Verfahrensschritt ist schematisch in **Fig. 3** dargestellt: Drei Aufnahmen $F_1$, $F_5$ und $F_9$ aus der Sequenz von Aufnahmen $F_1$, ..., $F_{12}$ in Fig. 2 wurden herausgegriffen und so angeordnet, dass die Bewegung des Gegenstands 1 im Bild, die auf den Transport des Gegenstands 1 zwischen den einzelnen Aufnahmen $F_1$, $F_5$ und $F_9$ zurückzuführen ist, herausgerechnet wurde. Das ist vorteilhaft, da der Versatz des Gegenstands 1 in den Aufnahmen F zwei Ursachen haben kann: den Transport durch die Transporteinheit (bzw. die relative Bewegung der Bildaufnahmeeinheit 2 zum Gegenstand 1) einerseits und die Disparität, also den Versatz in den Aufnahmen F aufgrund der unterschiedlichen Betrachtungswinkel auf den Gegenstand 1 andererseits.

In Fig 3 ist die Grundebenen des pyramidenförmigen Gegenstands 1 in der Fokusebene der Bildaufnahmeeinheit 2, d.h. wenn man g herausrechnet, liegen die Eckpunkte der Pyramidengrundebene an derselben Pixelposition.

Die Spitze der Pyramide aber, die aus der Grundebene herausragt, bewegt sich scheinbar aber doch; dieser Versatz ist die zu ermittelnde Disparität und gibt Rückschlüsse auf die Entfernung zum Kamerazentrum, bzw. zur Fokuseebene.

Die verbleibenden Unterschiede zwischen den Nachbarschaften 4a, 4b und 4c sind auf die Parallaxe zurückzuführen, also die perspektivische Verzerrung, die sich aufgrund der unterschiedlichen Betrachtungswinkel, die durch die Bewegung bzw. den Transport des Gegenstands 1 entlang des Pfads T zwischen der Erstellung der einzelnen Aufnahmen F entsteht. Der Abstand, der nun z.B. zwischen den Nachbarschaften 4a und 4b liegt, ist die zu ermittelnde Disparität.

In diesem Schritt wird für einen jeweils betrachteten Eintrag E(z,s) bzw. ein jeweils betrachtetes Pixel, an Position (z,s) mit Nachbarschaft (E(z-1,s-1), E(z-1,s), E(z-1,s+1), E(z,s-1), E(z,s), E(z,s+1), E(z+1,s-1), E(z+1,s), E(z+1,s+1)), das der Aufnahme $F_5$ zugeordnet ist (siehe Nachbarschaft 4b in Fig.3), jeder Eintrag G bzw. jedes Pixel mit seiner entsprechenden Nachbarschaft 4, das der Aufnahme $F_9$ zugeordnet ist, untersucht (siehe Markierung 4c in Fig.3).

So werden schließlich von der Verarbeitungseinheit für die betrachtete Nachbarschaft 4b des betrachteten Eintrags E(z,s) der ausgewählten Aufnahme $F_5$ die benachbarten Einträge der Nachbarschaft 4c der nachfolgenden Aufnahme $F_9$ mit dem höheren Aufnahmeindex $a_9$ ermittelt, die denselben Gegenstandsbereich, also die Spitze des pyramidenförmigen Gegenstandsbereichs 1 zeigen. Weiters können so auch jeweils benachbarte Einträge zumindest einer vorhergehenden Aufnahme F mit einem niedrigeren Aufnahmeindex ermittelt werden - im Ausführungsbeispiel ist dies die Nachbarschaft 4a der Aufnahme $F_1$ mit dem Aufnahmeindex $a_1$, die ebenfalls die Spitze des pyramidenförmigen Gegenstandsbereichs 1 zeigt.

Sind mehrere Nachbarschaftsgrößen k=n festgelegt worden, wird dieser Schritt für ausgewählte oder alle n Nachbarschaftsgrößen wiederholt.

Unter der Annahme, dass es sich um ein rektifiziertes Aufnahmesystem handelt, brauchen korrespondierende Einträge bzw. Pixel nur entlang einer Epipolarlinie gesucht werden, insbesondere kann man dann davon ausgehen, dass die Einträge E und G entlang derselben Zeile mit Koordinate z liegen. Weiters wird eine ungefähre Geschwindigkeit des Gegenstands 1 vor der Bildaufnahmeeinheit 2 angenommen, sodass man schon jenen Teil des Abstands g entlang der Epipolarlinie, der nicht auf die Parallaxe, sondern auf den Transport zurückzuführen ist, als bekannt annehmen kann. Liegt ein rektifiziertes Aufnahmesystem vor, bedeutet dies, dass vorteilhafterweise erstens die Linsenverzerrung, zweitens perspektivische Verzerrungen, die entstehen, wenn Kamerasensorebene und Transportebene nicht parallel sind, herausgerechnet wurden und dass, drittens, Epipolarlinien als achsenparallel angenommen werden können. Sollte eine oder mehrere dieser Bedingungen nicht erfüllt werden, ist dies für die Durchführung eines erfindungsgemäßen Verfahrens nicht erheblich und kann das beispielsweise durch aufwändigere Suchalgorithmen z.B. entlang schiefer Bahnen, variierender Nachbarschaftsgrößen, komplizierteren Korrelationen, kompensiert werden, was aber immer sowohl längere Rechenzeit als auch intensivere Speichernutzung bedeutet und somit auf die Gesamtperformance negative Auswirkung hat.

Sind zur Nachbarschaft 4b des Eintrags E(z,s) der Aufnahme $F_5$ so die Nachbarschaften 4a, 4c ermittelt worden, die denselben Gegenstandsbereich zeigen, wird anschließend ein Nachbarschafts-Vorwärts-Disparitäts-Wert $d_v^k$ und ein Nachbarschafts-Rückwärts-Disparitäts-Wert $d_r^k$ für diese Nachbarschaften berechnet.

Der Nachbarschafts-Rückwärts-Disparitäts-Wert $d_r^k$ gibt dabei die Disparität zwischen den benachbarten Einträgen der ausgewählten Aufnahme $F_5$, also der Nachbarschaft 4b im Ausführungsbeispiel, und den entsprechenden benachbarten Einträgen der vorhergehenden Aufnahme $F_1$, also der Nachbarschaft 4a, an. Der Nachbarschafts-Vorwärts-Disparitäts-Wert $d_v^k$ gibt die Disparität zwischen den benachbarten Einträgen der ausgewählten Aufnahme $F_5$, also der Nachbarschaft 4b im Ausführungsbeispiel, und den entsprechenden benachbarten Einträgen der jeweils nachfolgenden Aufnahme $F_9$, also der Nachbarschaft 4c, an.

Dieser Schritt kann selbstverständlich auch für mehrere verschiedene vorgegebene Aufnahmeindex-Differenzen $\Delta a$ durchgeführt werden. So im gezeigten Ausführungsbeispiel nicht nur nach einer Aufnahmeindex-Differenzen $\Delta a=4$ gesucht werden, was ausgehend von Einträgen E, die der Aufnahme $F_5$ zugeordnet sind, Einträge der $F_1$ und $F_9$ liefert, sondern auch z.B. für Aufnahmeindex-Differenzen $\Delta a=8$, was ausgehend von z.B. Einträgen der Aufnahme $F_9$ korrespondierende Einträge der Aufnahmen $F_1$ und $F_{17}$ liefern würde. Diese vorgegebene Aufnahmeindex-Differenzen $\Delta a$ sind bevorzugt Vielfache der Anzahl der Beleuchtungs-Konfigurationen, da beim Suchen von Korrespondenzen in Aufnahmen unterschiedlicher Beleuchtungs-Konfigurationen die Effekte der unterschiedlichen Beleuchtung herausgerechnet werden müssen, was zusätzliche Rechenleistung erfordert.

Im Fall, dass mehrere Nachbarschaftsgrößen k=n festgelegt worden sind, kann dieser Schritt für ausgewählte oder alle n Nachbarschaftsgrößen durchgeführt werden.

Im gezeigten Ausführungsbeispiel wird zusätzlich zum Nachbarschafts-Vorwärts-Disparitäts-Wert $d_v^k$ und zum Nachbarschafts-Rückwärts-Disparitäts-Wert $d_r^k$ ein Nachbarschafts-Vorwärts-Konfidenz-Wert und ein Nachbarschafts-Rückwärts-Konfidenz-Wert ermittelt.

Der Nachbarschafts-Rückwärts-Konfidenz-Wert $e_r^k$ gibt die Konfidenz der zwischen den benachbarten Einträgen der ausgewählten Aufnahme $F_5$, also der Nachbarschaft 4b im Ausführungsbeispiel, und den entsprechenden benachbarten Einträgen der vorhergehenden Aufnahme $F_1$, also der Nachbarschaft 4a, berechneten Disparität an. Der Nachbarschafts-Vorwärts-Konfidenz-Wert $e_v^k$ gibt die Konfidenz zwischen den benachbarten Einträgen der ausgewählten Aufnahme $F_5$, also der Nachbarschaft 4b im Ausführungsbeispiel, und den entsprechenden benachbarten Einträgen der jeweils nachfolgenden Aufnahme $F_9$, also der Nachbarschaft 4c, berechneten Disparität an.

Dieser Nachbarschafts-Vorwärts-Konfidenz-Wert $e_v^k$ bzw. Nachbarschafts-Rückwärts-Konfidenz-Wert $e_r^k$ ist pro Eintrag bzw. pro Pixel und pro Nachbarschaftsgröße k ein skalarer Wert. Diese Konfidenzen können selbstverständlich auch für verschiedene Aufnahmeindex-Differenzen $\Delta a$ und, im Fall, dass mehrere Nachbarschaftsgrößen k=n festgelegt worden sind, für ausgewählte oder alle n Nachbarschaftsgrößen durchgeführt werden.

Sowohl für die Berechnung der Disparität als auch der Konfidenz gibt es zahlreiche verschiedene Methoden in der Literatur, siehe etwa Szeliski, Richard. Computer Vision: Algorithms and Applications. Springer Science & Business Media, 2010.

Im Ausführungsbeispiel erfolgt die Berechnung konkret indem für ganzzahlige Aufnahmeindizes a=...,-2,-1,0,1,2,... folgender Wert ("Summe absoluter Differenzen") von der Verarbeitungseinheit berechnet wird:

$$e_v^k(d_v^k) = \sum_{i=-k}^{k} \sum_{j=-k}^{k} |E(z+i, s+j) - G(z+i, s+j-d_v^k)|$$

Derjenige Wert $d_v^k$, für den $e_v^k$ am niedrigsten ist, heißt Nachbarschafts-Vorwärts-Disparitäts-Wert, d.h. Vorwärtsdisparität zur Nachbarschaftsgröße k. Da im Ausführungsbeispiel Einträge verglichen wurden, die den Aufnahmen $F_5$ und $F_9$ zugeordnet sind, ist dieser Wert für den Eintrag bzw. das Pixel E(z,s) zur Baseline, d.h. zur Aufnahmeindex-Differenz, $\Delta a=4$.

Das zugehörige $e_v^k$ heißt Nachbarschafts-Vorwärts-Disparitäts-Wert, d.h. Vorwärtskonfidenz zur Nachbarschaftsgröße k des Eintrags bzw. des Pixels E(z,s) zur Baseline, d.h. zur Aufnahmeindex-Differenz $\Delta a=4$ und ist ein Maß für die Wahrscheinlichkeit, dass diese Disparität stimmt. Diese Disparitäten können später in Tiefen, d.h. Abstände von Gegenstandsbereichen zur Bildaufnahmeeinheit 2, umgerechnet werden, worauf weiter unten noch einmal eingegangen wird.

Aus der Literatur ist ebenfalls bekannt, dass es beim Feature Matching zu sogenannten Vorwärts-Rückwärts-(auch: Links-Rechts)-Inkonsistenzen kommen kann, d.h. wenn die in Aufnahme $F_5$ detektierte Nachbarschaft 4b der Größe k in der Aufnahme $F_9$ gesucht wird, ergibt das ein anderes Resultat, genannt Nachbarschafts-Vorwärts-Disparitäts-Wert $d_v^k$, als wenn die Nachbarschaft 4c der Größe k aus der Aufnahme $F_9$ in der Aufnahme $F_5$ gesucht wird, das wäre dann der Nachbarschafts-Rückwärts-Disparitäts-Wert $d_r^k$.

Für jeden Eintrag E bzw. jedes Pixel, das der Aufnahme $F_5$ zugeordnet ist, gibt es nun k viele, verschiedene Nachbarschafts-Vorwärts-Disparitäts-Werte $d_v^k$ zur Aufnahme $F_9$, d.h. zu den Einträgen mit dem Aufnahmeindex $a_9$ der Bildstapel-Datenstruktur BD. Diese k verschiedenen Nachbarschafts-Vorwärts-Disparitäts-Werte $d_v^k$ werden pro Eintrag E bzw. pro Pixel der Aufnahme $F_5$ zu einem einzigen Vorwärts-Disparitäts-Wert $d_v(E)$ aggregiert. Im Ausführungsbeispiel wird dazu von der Verarbeitungseinheit ein Mittelwert über alle $d_v^k$ gebildet.

Weiters werden auch die k verschiedenen Rückwärts-Disparitäts-Werte $d_r^k$, die für die Aufnahme $F_5$ mit der Aufnahme $F_1$ für die k verschiedenen Nachbarschaftsgrößen berechnet wurden, pro Eintrag E bzw. pro Pixel der Aufnahme $F_5$ zu einem einzigen Rückwärts-Disparitäts-Wert $d_r(E)$ aggregiert. Im Ausführungsbeispiel wird dazu ebenfalls ein Mittelwert über alle $d_r^k$ gebildet.

Im Ausführungsbeispiel wird zusätzlich für jeden Eintrag E bzw. für jedes Pixel der Aufnahme $F_5$ auch ein Vorwärts-Konfidenz-Wert $e_v(E)$ durch Mittelwertbildung über die k vielen Nachbarschafts-Vorwärts-Konfidenz-Werte berechnet werden und analog auch ein Rückwärts-Konfidenz-Wert $e_r(E)$ über die k verschiedenen Nachbarschafts-Rückwärts-Konfidenz-Werte.

An den Rändern, beispielsweise bei Aufnahme $F_1$ oder $F_{12}$, können gegebenenfalls nur benachbarte Einträge derselben Nachbarschaftsgröße einer nachfolgenden Aufnahme mit einem höheren Aufnahmeindex oder nur benachbarte Einträge derselben Nachbarschaftsgröße einer vorhergehenden Aufnahme mit einem niedrigeren Aufnahmeindex ermittelt werden, sodass etwas weniger Daten zur Verfügung stehen, was bei einem erfindungsgemäßen Verfahren jedoch keinerlei Schwierigkeiten bereitet. Optional kann die Aufnahme schon etwas "früher" begonnen und etwas "später" beendet werden.

Anschließend folgt im gezeigten Ausführungsbeispiel eine optionale Prüfung für ausgewählte oder alle Einträge der Bildstapel-Datenstruktur BD, ob bei dem jeweiligen Aufnahmeindex $a_1$, ..., $a_{12}$ und für eine jeweilige Aufnahmeindex-Differenz $\Delta a$ die Vorwärts-Disparitäts-Werte $d_v$ mit den Rückwärts-Disparitäts-Werten $d_r$ übereinstimmen. So wird im Ausführungsbeispiel z.B. für die Einträge E, die der Aufnahme $F_5$ zugeordnet sind, überprüft, ob für die Aufnahmeindex-Differenz z.B. $\Delta a=4$ die Vorwärts-Disparitäts-Werte vom Bild $F_5$ (also zum Bild $F_9$) übereinstimmen mit den Rückwärts-Disparitäts-Werten des Bildes $F_5$ (also zum Bild $F_1$).

Zusätzlich oder alternativ dazu ist es auch möglich, dass optional, für ausgewählte oder alle Einträge der Bildstapel-Datenstruktur BD überprüft wird, ob bei dem jeweiligen Aufnahmeindex $a_1$, ..., $a_{12}$ und für eine jeweilige

Aufnahmeindex-Differenz $\Delta a$

- die Vorwärts-Disparitäts-Werte der Aufnahme $F_1$ (also zur Aufnahme $F_5$) übereinstimmen mit den Rückwärts-Disparitäts-Werten der Aufnahme $F_5$ (also zur Aufnahme $F_1$) und/oder
- die Vorwärts-Disparitäts-Werte der Aufnahme $F_5$ (also zur Aufnahme $F_9$) übereinstimmen mit den Rückwärts-Disparitäts-Werten der Aufnahme $F_9$ (also zur Aufnahme $F_5$)

Wenn irgendeines dieser Paare in allen oben angeführten Fällen nicht übereinstimmt, können optional der Vorwärts-Konfidenz-Wert $e_v$ und der Rückwärts-Konfidenz-Wert $e_r$ für die jeweiligen Einträge bei der jeweiligen Aufnahmeindex-Differenz $\Delta a$, insbesondere durch Reduktion des Konfidenzwerts, angepasst werden. Im gezeigten Ausführungsbeispiel wird dabei der Konfidenz-Wert des Eintrags E reduziert, z.B. halbiert.

Anschließend wird für ausgewählte, insbesondere alle, Einträge E, G der Bildstapel-Datenstruktur BD einzeln jeweils der Vorwärts-Disparitäts-Wert $d_v$ bei einem jeweiligen Aufnahmeindex mit dem Rückwärts-Disparitäts-Wert $d_r$ des jeweils aufgefundenen Vorwärts-Eintrags, z.B. durch Mittelwertbildung, aggregiert und derart ein einzelner Disparitäts-Wert d für jeden Eintrag E, G - z.B. ein Disparitäts-Wert d(E(z,s)) für den Eintrag E(z,s) - erstellt.

Sind wie im Ausführungsbeispiel auch Vorwärts-Konfidenz-Werte $e_v$ und Rückwärts-Konfidenz-Werte $e_r$ berechnet worden, kann auch, wie im Ausführungsbeispiel, für ausgewählte, insbesondere alle, Einträge E, G der Bildstapel-Datenstruktur BD einzeln jeweils der Vorwärts-Konfidenz-Wert $e_v$ bei einem jeweiligen Aufnahmeindex mit dem Rückwärts-Konfidenz-Wert $e_r$ des jeweils aufgefundenen Vorwärts-Eintrags, z.B. durch Mittelwertbildung, aggregiert und derart ein Konfidenz-Wert e für den jeweiligen Eintrag E, G erstellt werden - z.B. ein Konfidenz-Wert e(E(z,s)) für den Eintrag E(z,s).

Die bisher beschriebenen Schritte haben nur Aufnahmen $F_1$, $F_5$, $F_9$,... der Sequenz mit *einer* Beleuchtungs-Konfiguration bzw. Beleuchtungs-Richtung $C_1$ beschrieben; sie werden aber genauso für die Beleuchtungs-Richtung $C_2$ (also Aufnahmen $F_2$, $F_6$, $F_{10}$ usw), die Beleuchtungs-Richtung $C_3$ (also Aufnahmen $F_3$, $F_7$, $F_{11}$), und die Beleuchtungs-Richtung $C_4$ (also Aufnahmen $F_4$, $F_8$, $F_{12}$) durchgeführt.

Von der Verarbeitungseinheit wird daher anschließend z.B. pro Beleuchtungs-Konfiguration eine Gegenstands-Datenstruktur 5a, ..., 5d oder eine einzelne Gegenstands-Datenstruktur 5 mit einer "Schicht" von Grund-Einträgen 7a, ..., 7d für jede Beleuchtungs-Konfiguration erstellt, die bevorzugt einen Disparitäts-Wert d und einen Konfidenz-Wert e für jeden Grund-Eintrag 7 enthält, aber auch mehrere Disparitäts-Werte d bzw. Konfidenz-Werte e für jeden Grund-Eintrag 7 enthalten kann.

Diese Gegenstands-Datenstrukturen 5; 5a, ..., 5d weisen jeweils eine Anzahl an Grund-Einträgen 7 auf, wobei jeder Grund-Eintrag 7 mit einem Teil des aufgenommenen Gegenstands 1, insbesondere eines Teils der Oberfläche, korrespondiert. Jeder Grund-Eintrag 7; 7a, ..., 7d einer Gegenstands-Datenstruktur 5; 5a, ..., 5d ist also einem Gegenstandsbereich des aufgenommenen Gegenstands 1 zugeordnet und die einzelnen Disparitäts-Werte d der Einträge E, G der Bildstapel-Datenstruktur BD werden über ihren Aufnahmeindex $a_1$, ..., $a_{12}$ den Grund-Einträgen 7; 7a, ..., 7d der Gegenstands-Datenstruktur 5; 5a, ..., 5d zugeordnet.

So wird jedem Grund-Eintrag 7; 7a, ..., 7d der Gegenstands-Datenstruktur 5; 5a, ..., 5d zumindest ein Disparitäts-Wert d zugeordnet.

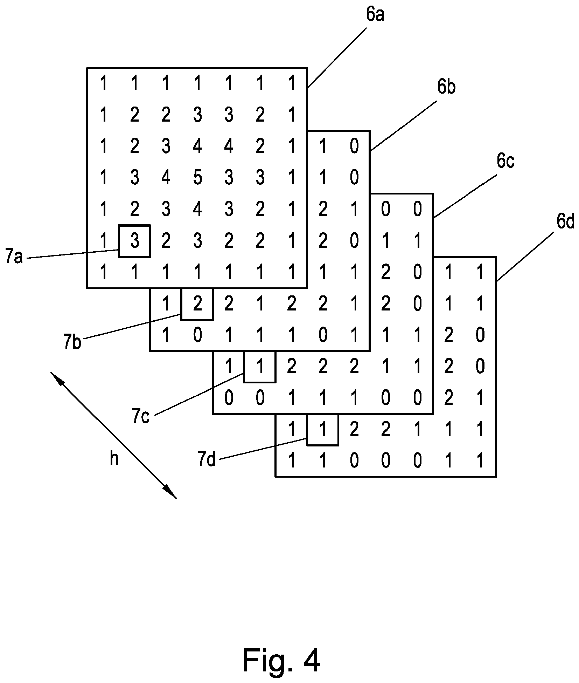

**Fig 4** zeigt für das Ausführungsbeispiel Ausschnitte 6a, ..., 6d aus der Gegenstands-Datenstruktur 5. Der Ausschnitt 6a zeigt die Disparität-Werte d für den pyramidenförmigen Gegenstand 1 bei Beleuchtung durch die Beleuchtungseinheit 3a. Darunter angeordnet ist ein Ausschnitt 6b aus der Gegenstands-Datenstruktur 5, der die Disparität-Werte d für den pyramidenförmigen Gegenstand 1 bei Beleuchtung durch die Beleuchtungseinheit 3b zeigt. Der darunter angeordnete Ausschnitt 6c zeigt die Disparität-Werte d für den pyramidenförmigen Gegenstand 1 bei Beleuchtung durch die Beleuchtungseinheit 3c. Der wiederum darunter angeordnete Ausschnitt 6d zeigt die Disparität-Werte d für den pyramidenförmigen Gegenstand 1 bei Beleuchtung durch die Beleuchtungseinheit 3d.

Fig. 4 zeigt also schematisch einen Ausschnitt aus der dreidimensionalen Gegenstands-Datenstruktur 5. Die "Breite" und "Höhe" der Gegenstands-Datenstruktur 5 korrespondieren mit der Breite und Höhe des pyramidenförmigen Gegenstands 1 in den Aufnahmen F. Die "Tiefe" h der Gegenstands-Datenstruktur 5 ist die Anzahl der Hypothesen, die im Ausführungsbeispiel mit der Anzahl der Beleuchtungs-Konfigurationen zusammenfällt.

Der Grund-Eintrag 7a dieser Gegenstands-Datenstruktur 5 enthält also einen ermittelten Disparitäts-Wert d eines Gegenstandsbereichs für die Beleuchtungs-Richtung $C_1$ bei Beleuchtung durch die Beleuchtungseinheit 3a, der Grund-Eintrag 7b einen ermittelten Disparitäts-Wert d des Gegenstandsbereichs für die entsprechende Beleuchtungs-Richtung $C_2$ bei Beleuchtung durch die Beleuchtungseinheit 3b, der Grund-Eintrag 7c einen ermittelten Disparitäts-Wert d des Gegenstandsbereichs für die entsprechende Beleuchtungs-Richtung $C_3$ bei Beleuchtung durch die Beleuchtungseinheit 3c und der Grund-Eintrag 7d einem ermittelten Disparitäts-Wert d des Gegenstandsbereichs für die entsprechende Beleuchtungs-Richtung $C_4$ bei Beleuchtung durch die Beleuchtungseinheit 3d.

Im unteren Bereich der Fig. 3 findet sich eine schematische Darstellung des Ausschnitts 6a der Gegenstands-Datenstruktur 5 für die Beleuchtungskonfiguration 3a. Im Zentrum dieses Ausschnitts 6a sind als Detail die Disparitäts-Werte d des pyramidenförmigen Gegenstands 1 angegeben, die in Fig. 4 näher erläutert werden. Die vertikale Hilfslinie in Fig. 3 veranschaulicht, zu welchem Grund-Eintrag 7 die Nachbarschaften 4 aus den Aufnahmen F beitragen. Der Grund-Eintrag 7a aus dem Ausschnitt 6a der Gegenstands-Datenstruktur 5 korrespondiert mit allen Pixeln aus den Aufnahmen bei Beleuchtung durch die Beleuchtungseinheit 3a bzw. die entsprechende Beleuchtungs-Richtung C1, der Grund-Eintrag 7b mit der Beleuchtungseinheit 3b bzw. der Beleuchtungs-Richtung C2 usw. Begleitend kann es, wie im Ausführungsbeispiel, noch einen Konfidenz-Wert geben (nicht in den Figuren dargestellt), auf den die Überlegungen oben analog zutreffen.

Ist, wie im Ausführungsbeispiel vorab eine Kalibrierung des Aufnahmesystems vorgenommen worden und ist der Pfad T bekannt, entlang dessen der Gegenstand 1 durchs den Aufnahmebereich der Bildaufnahmeeinheit 2 wandert, kann vorteilhafterweise daraus abgeleitet werden, wie weit der Gegenstand 1 sich von der ersten Aufnahme $F_1$ einer Beleuchtungs-Konfiguration bzw. einer Beleuchtungs-Richtung $C_1$ zur ersten Aufnahme $F_2$ der nächsten Beleuchtungs-konfiguration bzw. Beleuchtungs-Richtung $C_2$ bewegt hat. Die Bewegung des Gegenstands 1 während der Aufnahme zwischen dem Ein- und Ausschalten der Beleuchtungseinheiten 3a und 3b bzw. den Beleuchtungs-Richtungen $C_1$ und $C_2$ und somit der Versatz der Pyramidengrundrisse von Aufnahme $F_1$ auf Aufnahme $F_2$ auf Aufnahme $F_3$ auf Aufnahme $F_4$ kann auch wie in Fig 2 folgende null sein. Wie oben bereits erwähnt, ist das ist aber keine Voraussetzung und wird auch üblicherweise nicht der Fall sein, da es eine sehr hohe Strobing-Frequenz (relativ zur Transportgeschwindigkeit) voraussetzt.

Weiters kann draus abgeleitet werden, wie weit der Gegenstand 1 sich von der ersten Aufnahme $F_1$ einer Beleuchtungs-Konfiguration bzw. einer Beleuchtungs-Richtung $C_1$ zur zweiten Aufnahme $F_5$ derselben Beleuchtungs-Konfiguration bzw. Beleuchtungs-Richtung $C_1$ bewegt hat, nämlich um den Abstand g. Dieser Abstand kann mithilfe des Stereo Matchings, wie oben beschrieben, nachjustiert werden, falls er in der Praxis (etwa durch Transportungenauigkeiten) nicht ideal konstant ist. Hierfür muss nur der Suchraum für die Nachbarschaften erweitert werden, was aber keinerlei Einschränkung für ein erfindungsgemäßes Verfahren darstellt.

Somit kann aus der gesamten Sequenz von Aufnahmen $F_1$, ..., $F_{12}$ des Gegenstands 1 nun eine Gegenstands-Datenstruktur 5a, ..., 5d für jede Beleuchtungs-Konfiguration einzeln erstellt werden. Wie bereits zuvor erwähnt, kann alternativ oder zusätzlich dazu kann auch eine Gegenstands-Datenstruktur 5 erstellt werden, die Grund-Einträge 7a, ..., 7d für jede der Beleuchtungs-Konfigurationen umfasst.

In einer derartigen Gegenstands-Datenstruktur 5; 5a, ..., 5d wird nun für jeden aufgenommenen Grund-Eintrag 7; 7a, ..., 7d bzw. jedes Pixel des Gegenstands 1 zumindest ein Disparitäts-Wert d und Konfidenz-Wert e, z.B. gemittelt über alle Aufnahmen $F_1$, ..., $F_{12}$, gespeichert. Anders formuliert, werden nun die Disparitäts-Werte d und die Konfidenz-Werte e aller Aufnahmen $F_1$, ..., $F_{12}$ der Bildsequenz zu einer einzigen Gegenstands-Datenstruktur 5 mit separaten Grund-Einträgen 7a, ..., 7d für jede Beleuchtungs-Konfiguration oder einer eigenen Gegenstands-Datenstruktur 5a, ..., 5d für jede Beleuchtungs-Konfiguration zusammengefasst.

Für jedes Pixel aus der Gesamtszene gibt es aufgrund der überlappend ausgeführten Aufnahmen $F_1$, $F_2$, usw und sich ändernden Beleuchtungs-Richtungen $C_1$, ..., $C_4$ mehrere Disparitäts-Werte d und Konfidenz-Werte e, die in den Grund-Einträgen 7; 7a bis 7d enthalten sind. Im einfachsten Fall können all diese Disparitäts-Werte d pro Grund-Eintrag 7 durch Mittelwertbildung oder Maximalwertbildung aggregiert werden, wodurch die "Tiefe" h der Gegenstands-Datenstruktur 5, gleich 1 ist. Mit der "Tiefe" h der Gegenstands-Datenstruktur 5 ist die Ausdehnung bzw. die dritte Dimension der Gegenstands-Datenstruktur 5 gemeint. Dieser benutzerdefinierte Wert der "Tiefe" h der Gegenstands-Datenstruktur 5 legt also fest, wie viele Disparitäts-Werte d pro Grund-Eintrag 7 bzw. Pixel maximal gespeichert werden.

In vielen Anwendungen, z.B. für transparente Objekte oder bei Hinterschneidungen ist h>1 sinnvoll, sodass man besser von Voxeln als von Pixeln sprechen sollte. Diese Tensor-Datenstruktur nennt man Depth Volume; sie hat die Dimensionen (Höhe des Gegenstands 1) x (Breite des Gegenstands 1) $\times$ h.

Aus dem Stand der Technik ist es bekannt (siehe Antensteiner, Doris, Svorad Štolc, and Thomas Pock. "A review of depth and normal fusion algorithms." *Sensors* 18.2 (2018): 431, oder Peng, J., Xiong, Z., Zhang, Y., Liu, D., & Wu, F. (2017, December). Lf-fusion: Dense and accurate 3D reconstruction from light field images. In 2017 IEEE Visual Communications and Image Processing (VCIP) (pp. 1-4). IEEE.), ein Depth Volume anzulegen, das so viele Einträge in der "Tiefe" dritten Dimension hat wie Disparitätshypothesen, sodass ohne weiteres 100 oder mehr Einträge vorhanden sein können.

Anschließend können z.B. mit der *Truncated Signed Distance Function* (TSDF, siehe zB Newcombe, R. A., Izadi, S., Hilliges, O., Molyneaux, D., Kim, D., Davison, A. J., ... & Fitzgibbon, A. (2011, October). KinectFusion: Real-time dense surface mapping and tracking. In 2011 10th IEEE International Symposium on Mixed and Augmented Reality (pp. 127-136). IEEE.) diese Disparitäten in Tiefen eines 3D-Volumens umgerechnet. Der Begriff Tiefe bezeichnet in diesem Fall den Abstand des jeweiligen Gegenstandsbereichs von der Bildaufnahmeeinheit 2 in metrischen Einheiten und kann mittels einer Kalibrierung aus den Disparitäten erfolgen.

Im Gegensatz dazu wird im gezeigten Ausführungsbeispiel eines erfindungsgemäßen Verfahrens die "Tiefe" h der Gegenstands-Datenstruktur 5 größer oder gleich der Anzahl der Beleuchtungs-Konfigurationen, aber jedenfalls kleiner als die Anzahl der unterschiedlichen Möglichkeiten für Disparitätswerten d pro Pixel bzw. Eintrag gewählt. Dies bedeutet, vereinfacht gesprochen, dass die Gegenstands-Datenstruktur 5 "Schichten" von Grund-Einträgen 7a, ..., 7d für jede Beleuchtungs-Konfiguration separat aufweist.

Dadurch, dass im gezeigten Ausführungsbeispiel dank des mitgespeicherten Konfidenz-Werts e für jeden Disparitäts-Wert d nur die h vielen relevantesten ausgewählt und mitgespeichert werden, wird Speicher geschont und damit (Rechen-)Geschwindigkeit gewonnen. Dafür kann aber auch Textur-Information, was letztlich mehr relevante Information fasst, mitgespeichert werden.

Wenn der Wert h >= der Anzahl der Beleuchtungs-Konfigurationen ist, kann für jede Beleuchtungs-Konfiguration, im Ausführungsbeispiel für jede Beleuchtungs-Richtung $C_1$, ..., $C_4$, einen anderen Disparitäts-Wert d erhalten - das ist zB. äußerst nützlich, um Abschattungen zu erkennen, wie dies auch in Schilling, H., Diebold, M., Rother, C., & Jähne, B. (2018). Trust your model: Light field depth estimation with inline occlusion handling. In Proceedings of the IEEE Conference on Computer Vision and Pattern Recognition (pp. 4530-4538) erklärt ist.

Im Ausführungsbeispiel wird angenommen, dass als "Tiefe" h der Gegenstandsdatenstruktur 5 der Wert h = der Anzahl der Beleuchtungs-Konfigurationen (also 4) gewählt wurde. Außerdem wird im Ausführungsbeispiel angenommen, dass der Gegenstand 1 achsenparallel von links nach rechts durch die Aufnahmesequenz $F_1$ bis $F_{12}$ bewegt wurde (siehe Fig.2); somit ist die "Höhe" der Gegenstands-Datenstruktur 5 vorteilhafterweise gleich der konstanten "Höhe" (Anzahl der Pixelzeilen) jeder Aufnahme F ist. Die "Breite" (Anzahl der Pixelspalten) der Gegenstands-Datenstruktur 5 ist so groß wie die "Breite" einer Aufnahme F plus der Länge des Weges (in Pixel) des Gegenstands 1 durch die Bildsequenz von der ersten Aufnahme $F_1$ zur letzten Aufnahme $F_{12}$.

Jeder Grund-Eintrag 7a, ..., 7d der Gegenstands-Datenstruktur 5 entspricht einem ermittelten Disparitäts-Wert d für die entsprechende Beleuchtungs-Konfiguration. Parallel kann, wie im Ausführungsbeispiel, optional auch eine Gegenstands-Konfidenz-Datenstruktur erstellt werden, die für jeden Grund-Eintrag 7a, ..., 7d dieser Gegenstands-Datenstruktur 5, der ja einem Disparitäts-Wert d entspricht, einen Konfidenz-Wert e speichert.

Die resultierende Gegenstands-Datenstruktur 5 aus dem letzten Schritt kann dazu verwendet werden, mittels bekannter Verfahren die Tiefe der Szene, d.h. den Abstand einzelner Gegenstandspunkte zur Bildaufnahmeeinheit 2, zu rekonstruieren und auch die Konfidenz dieser Tiefenhypothesen anzugeben.

Dies ermöglicht eine verbesserte Schätzung der Oberflächennormalen mittels Photometrischem Stereo, da - im Gegensatz zu aus der Literatur bekannten Verfahren z.B. Sabzevari, Reza, Alessio Del Bue, and Vittorio Murino. "Combining Structure from Motion and Photometric Stereo: A Piecewise Formulation." Eurographics (Posters). 2012. oder Antensteiner, D., Štolc, S., Valentin, K., Blaschitz, B., Huber-Mörk, R., & Pock, T. (2017). Highprecision 3d sensing with hybrid light field & photometric stereo approach in multi-line scan framework. *Electronic Imaging, 2017*(9), 52-60 - auch die Konfidenz pro Lichtrichtung berechnet wird.

Wie bereits zuvor erwähnt, ist es bei einem erfindungsgemäßen Verfahren lediglich ausschlaggebend, dass der Gegenstand 1 und eine Bildaufnahmeeinheit 2 entlang eines Pfads T relativ zueinander bewegt werden, sodass der Gegenstand 1 im Aufnahmebereich der Bildaufnahmeeinheit 2 erfassbar ist. Ob nun die Bildaufnahmeeinheit 2 bewegt wird und der Gegenstand 1 ruht, oder umgekehrt, ist nicht erheblich.

Im einfachsten Fall kann der Transport entlang des Pfads T einem geradlinigen Transport entlang einer Transportrichtung entsprechen, wie dies im Ausführungsbeispiel der Fall ist.

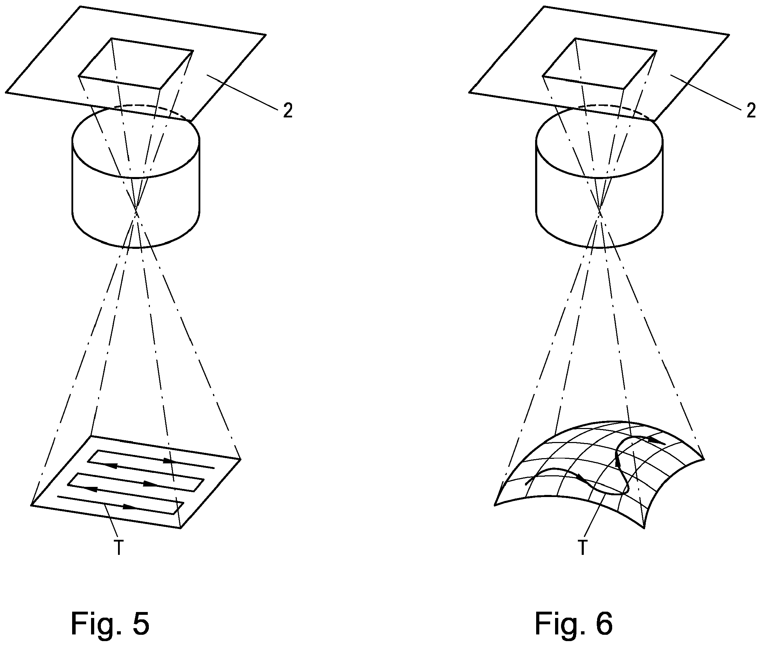

Alternativ ist es bei einem erfindungsgemäßen Verfahren beispielsweise auch möglich, dass der Gegenstand 1 entlang eines mäandrierenden Pfads T vor der Bildaufnahmeeinheit 2 bewegt wird, oder die Bildaufnahmeeinheit 2 bewegt sich mäandrierenden über den Gegenstand 1, wie dies in Fig. 5 schematisch dargestellt ist. So kann die Untersuchung einer gesamten Fläche gewährleistet werden.

Weiters alternativ dazu ist es bei einem erfindungsgemäßen Verfahren, wie in Fig 6 schematisch dargestellt, möglich, dass der Gegenstand 1 eine gekrümmte Oberfläche aufweist und die Bildaufnahmeeinheit 2 wird entlang eines Pfads T auf der bzw. über die Oberfläche des Gegenstands 1 geführt oder umgekehrt. Auch eine Kombination mit dem mäandrierenden Pfad T aus Fig 5 ist möglich, um eine gekrümmte Oberfläche aufzunehmen.

**Patentansprüche**

1. Computer-implementiertes Verfahren zur Erstellung von mehrdimensionalen Gegenstands-Datenstrukturen (5) für die Rekonstruktion der geometrischen Struktur, insbesondere der Oberfläche, eines aufgenommenen Gegenstands (1),

   - wobei der Gegenstand (1) und eine Bildaufnahmeeinheit (2) entlang eines Pfads (T) relativ zueinander bewegt werden, sodass der Gegenstand (1) im Aufnahmebereich der Bildaufnahmeeinheit (2) erfassbar ist,
   - wobei die Bildaufnahmeeinheit (2) einen Flächensensor umfasst, wobei der Flächensensor eine Vielzahl von Sensorpixeln aufweist, die in Zeilen und Spalten angeordnet sind,
   - wobei der Gegenstand (1) während der Erfassung von zumindest einer Beleuchtungseinheit (3; 3a, ..., 3d) mit zumindest einer Beleuchtungs-Konfiguration beleuchtet wird,
- wobei die zumindest eine Beleuchtungseinheit (3; 3a, ..., 3d) der jeweiligen Beleuchtungs-Konfiguration, mit der insbesondere jeweils ein zugeordnetes Lichtfeld aufgenommen wird, immer dieselbe Position und Ausrichtung zur Bildaufnahmeeinheit (2) aufweist, wenn der Gegenstand (1) mit der jeweiligen Beleuchtungs-Konfiguration beleuchtet wird,
- wobei von der Bildaufnahmeeinheit (2) eine Sequenz von Aufnahmen ($F_1$, ..., $F_{12}$) erstellt wird,

- wobei die einzelnen Aufnahmen ($F_1$, ..., $F_{12}$) jeweils Flächenaufnahmen des Gegenstands (1) umfassend ausgewählte, insbesondere alle, Sensorpixel sind,
- wobei die Aufnahmezeitpunkte für die Aufnahmen ($F_1$, ..., $F_{12}$) so gewählt werden, dass in zeitlich aufeinanderfolgend erstellten Aufnahmen ($F_1$, ..., $F_{12}$) der Sequenz der Gegenstand (1) mit der zumindest einen Beleuchtungs-Konfiguration beleuchtet wird, und
- wobei die einzelnen Pixel der Aufnahmen ($F_1$, ..., $F_{12}$) für jeden der vorgegebenen Aufnahmezeitpunkte zumindest einen Helligkeitswert für die einzelnen Gegenstandspunkte im Aufnahmebereich der Bildaufnahmeeinheit (2) umfassen,

- wobei eine Bildstapel-Datenstruktur (BD) basierend auf der Sequenz von Aufnahmen ($F_1$, ..., $F_{12}$) des Gegenstands (1) erstellt wird,

- wobei die einzelnen Einträge (E, G) der Bildstapel-Datenstruktur (BD) den einzelnen Pixeln der Aufnahmen ($F_1$, ..., $F_{12}$) der Sequenz zugeordnet sind, wobei insbesondere vorgesehen ist, dass die einzelnen Einträge (E, G) der Bildstapel-Datenstruktur (BD) jeweils einer Beleuchtungs-Konfiguration zugeordnet sind, und
- wobei alle Einträge (E, G), die derselben Aufnahme (F) zugeordnet sind, denselben Aufnahmeindex (a; $a_1$, ..., $a_{12}$) aufweisen, wobei der Aufnahmeindex (a; $a_1$, ..., $a_{12}$) die Position der jeweiligen Aufnahme in der Sequenz von Aufnahmen ($F_1$, ..., $F_{12}$) kennzeichnet, der der jeweilige Eintrag (E, G) zugeordnet ist,

- wobei für eine vorgegebene Anzahl (k) von Nachbarschaften (4; 4a, 4b, 4c) unterschiedlicher Nachbarschaftsgrößen benachbarter Einträge, die derselben Aufnahme ($F_1$, ..., $F_{12}$) zugeordnet sind, benachbarte Einträge derselben Nachbarschaftsgröße von einer Anzahl von, insbesondere zumindest zwei, Aufnahmen (F) gesucht werden,

- deren Aufnahmeindizes (a; $a_1$, ..., $a_{12}$) vom Aufnahmeindex ($a_5$) des ausgewählten Eintrags (E(z,s)) verschieden sind und
- die denselben Gegenstandsbereich zeigen,

sodass derart der jeweils betrachteten Nachbarschaft (4b) benachbarter Einträge

- jeweils benachbarte Einträge (4c) zumindest einer nachfolgenden Aufnahme ($F_9$) mit einem höheren Aufnahmeindex ($a_9$) und/oder
- jeweils benachbarte Einträge (4a) zumindest einer vorhergehenden Aufnahme ($F_1$) mit einem niedrigeren Aufnahmeindex ($a_1$)

zugeordnet werden,
- wobei für ausgewählte Aufnahmeindizes ($a_5$) und ausgewählte Aufnahmeindex-Differenzen ($\Delta a$) für die vorgegebene Anzahl (k) verschiedener Nachbarschaftsgrößen benachbarter Einträge (4b) einer jeweils ausgewählten Aufnahme ($F_5$) jeweils Folgendes berechnet wird:

- ein Nachbarschafts-Vorwärts-Disparitäts-Wert ($d_v{}^k$), der die Disparität zwischen den benachbarten Einträgen (4b) der jeweils ausgewählten Aufnahme ($F_5$) und den entsprechenden benachbarten Einträgen (4c) der jeweils aufgefundenen nachfolgenden Aufnahme ($F_9$) angibt und/oder
- ein Nachbarschafts-Rückwärts-Disparitäts-Wert ($d_r{}^k$), der die Disparität zwischen den benachbarten Einträgen (4b) der jeweils ausgewählten Aufnahme ($F_5$) und den entsprechenden benachbarten Einträgen (4a) der jeweils aufgefundenen vorhergehenden Aufnahme ($F_1$) angibt,

- wobei für ausgewählte Aufnahmeindizes ($a_5$) und ausgewählte Aufnahmeindex-Differenzen ($\Delta a$) für die vorgegebene Anzahl (k) verschiedener Nachbarschaftsgrößen benachbarter Einträge (4b) einer jeweils ausgewählten Aufnahme ($F_5$) die derart erstellten einzelnen Nachbarschafts-Vorwärts-Disparitäts-Werte ($d_v{}^k$) und/oder die derart erstellten einzelnen Nachbarschafts-Rückwärts-Disparitäts-Werte ($d_r{}^k$) der einzelnen Nach-

barschaftsgrößen, zu einem einzigen Vorwärts-Disparitäts-Wert ($d_v$) und/oder einem einzigen Rückwärts-Disparitäts-Wert ($d_r$) des jeweils ausgewählten Eintrags (E(z,s)), insbesondere durch Mittelwertbildung, aggregiert werden, sodass für die ausgewählten Einträge (E(z,s)) jeder ausgewählten Aufnahme ($F_5$) ein über alle Nachbarschaftsgrößen aggregierter Vorwärts-Disparitäts-Wert ($d_v$) und/oder Rückwärts-Disparitäts-Wert ($d_r$) bei dem jeweiligen Aufnahmeindex ($a_5$) und der jeweiligen Aufnahmeindex-Differenz ($\Delta a$) zur Verfügung steht,

- wobei für ausgewählte, insbesondere alle, Einträge (E, G) der Bildstapel-Datenstruktur (BD) einzeln jeweils der Vorwärts-Disparitäts-Wert ($d_v$) bei einem jeweiligen Aufnahmeindex ($a$; $a_1$, ..., $a_{12}$) mit dem Rückwärts-Disparitäts-Wert ($d_r$) des jeweils aufgefundenen Vorwärts-Eintrags, insbesondere durch Mittelwertbildung, aggregiert wird und derart ein Disparitäts-Wert ($d$) für den jeweiligen Eintrag (E, G) erstellt wird, und

- wobei für die derart ermittelten Disparitäts-Werte ($d$) eine Gegenstands-Datenstruktur (5), insbesondere ein Tensor, für den aufgenommenen Gegenstand (1) auf Grundlage der Disparitäts-Werte ($d$) der Einträge (E, G) der Bildstapel-Datenstruktur (BD) ausgewählter, insbesondere aller, Aufnahmeindizes ($a$; $a_1$, ..., $a_{12}$) erstellt wird,

- wobei die jeweilige Gegenstands-Datenstruktur (5) eine Anzahl an Grund-Einträgen (7; 7a, ..., 7d) aufweist, wobei jeder Grund-Eintrag (7; 7a, ..., 7d) mit einem Teil, insbesondere der Oberfläche, des aufgenommenen Gegenstands (1) korrespondiert,

- wobei jeder Grund-Eintrag (7; 7a, ..., 7d) der Gegenstands-Datenstruktur (5) einem Gegenstandsbereich des aufgenommenen Gegenstands (1) zugeordnet ist,

- wobei die einzelnen Disparitäts-Werte ($d$) der Einträge (E, G) der Bildstapel-Datenstruktur (BD) über deren jeweils zugeordneten Aufnahmeindex ($a$; $a_1$, ..., $a_{12}$) den Grund-Einträgen (7; 7a, ..., 7d) der Gegenstands-Datenstruktur (5) zugeordnet werden, und

- wobei die Disparitäts-Werte ($d$) ausgewählter, vorzugsweise aller, Einträge (E, G) derjenigen Aufnahmen ($F_1$, ..., $F_{12}$) der Bildstapel-Datenstruktur (BD), die den jeweiligen Gegenstandsbereich zeigen, insbesondere durch Mittelwertbildung, aggregiert werden, sodass jedem Grund-Eintrag (7; 7a, ..., 7d) der Gegenstands-Datenstruktur (5) zumindest ein Disparitäts-Wert ($d$) zugeordnet wird.

2. Verfahren nach Anspruch 1,

- wobei für ausgewählte Aufnahmeindizes ($a_5$) und ausgewählte Aufnahmeindex-Differenzen ($\Delta a$) für die vorgegebene Anzahl ($k$) verschiedener Nachbarschaftsgrößen benachbarter Einträge (4b) einer jeweils ausgewählten Aufnahme ($F_5$) zusätzlich jeweils Folgendes berechnet wird:

- ein Nachbarschafts-Vorwärts-Konfidenz-Wert ($e_v^k$), der die Konfidenz des zwischen den benachbarten Einträgen (4b) der jeweils ausgewählten Aufnahme ($F_5$) und den entsprechenden benachbarten Einträgen (4c) der jeweils aufgefundenen nachfolgenden Aufnahme ($F_9$) berechneten Nachbarschafts-Vorwärts-Disparitäts-Wert ($d_v^k$) angibt und/oder

- ein Nachbarschafts-Rückwärts-Konfidenz-Wert ($e_r^k$), der die Konfidenz des zwischen den benachbarten Einträgen (4b) der jeweils ausgewählten Aufnahme ($F_5$) und den entsprechenden benachbarten Einträgen (4a) der jeweils aufgefundenen vorangehenden Aufnahme ($F_1$) berechneten Nachbarschafts-Rückwärts-Disparitäts-Wert ($d_r^k$) angibt,

wobei die Konfidenz jeweils ein skalarer Wert für jeden Eintrag und jede Nachbarschaftsgröße bei der jeweiligen Aufnahmeindex-Differenz ($\Delta a$) ist,

- wobei für ausgewählte Aufnahmeindizes ($d_5$) und ausgewählte Aufnahmeindex-Differenzen ($\Delta a$) für die vorgegebene Anzahl ($k$) verschiedener Nachbarschaftsgrößen benachbarter Einträge (4b) einer jeweils ausgewählten Aufnahme ($F_5$) die derart erstellten einzelnen Nachbarschafts-Vorwärts-Konfidenz-Werte ($e_v^k$) und/oder die derart erstellten einzelnen Nachbarschafts-Rückwärts-Konfidenz-Werte ($e_r^k$) der einzelnen Nachbarschaftsgrößen, zu einem einzigen Vorwärts-Konfidenz-Wert ($e_v$) und/oder einem einzigen Rückwärts-Konfidenz-Wert ($e_r$) des jeweils ausgewählten Eintrags (E(z,s)), insbesondere durch Mittelwertbildung, aggregiert werden, sodass für die ausgewählten Einträge (E(z,s)) jeder ausgewählten Aufnahme ($F_5$) ein über alle Nachbarschaftsgrößen aggregierter Vorwärts-Konfidenz-Wert ($e_v$) und/oder Rückwärts-Konfidenz-Wert ($e_r$) bei dem jeweiligen Aufnahmeindex ($a_5$) und der jeweiligen Aufnahmeindex-Differenz ($\Delta a$) zur Verfügung steht,

- wobei für ausgewählte, insbesondere alle, Einträge (E, G) der Bildstapel-Datenstruktur (BD) einzeln jeweils der Vorwärts-Konfidenz-Wert ($e_v$) bei einem jeweiligen Aufnahmeindex ($a$; $a_1$, ..., $a_{12}$) mit dem Rückwärts-Konfidenz-Wert ($e$) des jeweils aufgefundenen Vorwärts-Eintrags, insbesondere durch Mittelwertbildung, aggregiert wird und derart ein Konfidenz-Wert ($e$) für den jeweiligen Eintrag (E, G) erstellt wird, und

- wobei für die derart ermittelten Konfidenz-Werte ($e$) eine Gegenstands-Konfidenz-Datenstruktur, insbesondere ein Tensor, für den aufgenommenen Gegenstand auf Grundlage der Konfidenz-Werte (e) der Einträge (E, G) der Bildstapel-Datenstruktur (BD) ausgewählter, insbesondere aller, Aufnahmeindizes (a; $a_1$, ..., $a_{12}$) erstellt wird, wobei der Aufbau der Gegenstands-Konfidenz-Datenstruktur dem Aufbau der Gegenstands-Datenstruktur (5) entspricht,

- wobei die einzelnen Konfidenz-Werte (e) der Einträge (E, G) der Bildstapel-Datenstruktur (BD) über den jeweils zugeordneten Aufnahmeindex (a; $a_1$, ..., $a_{12}$) den Grund-Einträgen der Gegenstands-Konfidenz-Datenstruktur zugeordnet werden, und
- wobei die Konfidenz-Werte (e) ausgewählter, vorzugsweise aller, Einträge (E, G) derjenigen Aufnahmen ($F_1$, ..., $F_{12}$) der Bildstapel-Datenstruktur (BD), die den jeweiligen Gegenstandsbereich zeigen, insbesondere durch Mittelwertbildung, aggregiert werden, sodass jedem Grund-Eintrag der Gegenstands-Konfidenz-Datenstruktur zumindest ein Konfidenz-Wert (e) zugeordnet wird.

3. Verfahren nach Anspruch 2,

- wobei der Gegenstand (1) während der Erfassung von der zumindest einen Beleuchtungseinheit (3; 3a, ..., 3d) abwechselnd mit zumindest zwei verschiedenen Beleuchtungs-Konfigurationen, insbesondere aus zumindest zwei verschiedenen Beleuchtungs-Richtungen (C; $C_1$, ..., $C_4$), beleuchtet wird,
- wobei die Aufnahmezeitpunkte für die Aufnahmen ($F_1$, ..., $F_{12}$) so gewählt werden, dass in zeitlich aufeinanderfolgend erstellten Aufnahmen ($F_1$, ..., $F_{12}$) der Sequenz der Gegenstand (1) abwechselnd mit den unterschiedlichen Beleuchtungs-Konfigurationen beleuchtet wird,
- wobei die einzelnen Einträge (E, G) der Bildstapel-Datenstruktur (BD) jeweils einer der Beleuchtungs-Konfigurationen zugeordnet sind,
- wobei benachbarte Einträge derselben Nachbarschaftsgröße von einer Anzahl von, insbesondere zumindest zwei, Aufnahmen (F) gesucht werden, die mit derselben Beleuchtungs-Konfiguration erstellt wurden und
- wobei

- für die ermittelten Disparitäts-Werte (d) und/oder für die ermittelten Konfidenz-Werte (e) für jede Beleuchtungs-Konfiguration einzeln jeweils eine Gegenstands-Datenstruktur (5a, ..., 5d) und/oder eine Gegenstands-Konfidenz-Datenstruktur erstellt wird, und/oder
- die Gegenstands-Datenstruktur (5) und/oder die Gegenstands-Konfidenz-Datenstruktur Grund-Einträge (7a, ..., 7d) für jede der Beleuchtungs-Konfigurationen umfasst, wobei den einzelnen Grund-Einträgen (7a, ..., 7d) der jeweiligen Beleuchtungs-Konfiguration die Disparitäts-Werte (d) und/oder die Konfidenz-Werte (e) ausgewählter, vorzugsweise aller, Einträge (E, G) derjenigen Aufnahmen ($F_1$, ..., $F_{12}$) der Bildstapel-Datenstruktur (BD), die den jeweiligen Gegenstandsbereich zeigen und mit derselben Beleuchtungs-Konfiguration erstellt wurden, insbesondere durch Mittelwertbildung, aggregiert zugeordnet werden.

4. Verfahren nach Anspruch 2 oder 3,

- wobei für ausgewählte Einträge (E, G) der Bildstapel-Datenstruktur (BD) jeweils überprüft wird, ob bei einem jeweiligen Aufnahmeindex (a; $a_1$, ..., $a_{12}$) und bei einer jeweiligen Aufnahmeindex-Differenz ($\Delta a$) der Vorwärts-Disparitäts-Wert ($d_v$) mit dem Rückwärts-Disparitäts-Wert ($d_r$) übereinstimmt und
- im Fall, dass keine Übereinstimmung vorliegt, der Vorwärts-Konfidenz-Wert ($e_v$) und der Rückwärts-Konfidenz-Wert ($e_r$) für den jeweiligen Eintrag (E, G), insbesondere durch Reduktion des jeweiligen Konfidenzwerts, angepasst werden.

5. Verfahren nach einem der vorangehenden Ansprüche, wobei bei der Suche nach benachbarten Einträgen derselben Nachbarschaftsgröße nach zumindest einem Vorwärts-Eintrag mit einem um eine vorgegebene Aufnahmeindex-Differenz ($\Delta a$) höheren Aufnahmeindex (a; $a_1$, ..., $a_{12}$) und zumindest einem Rückwärts-Eintrag mit einem um eine vorgegebene Aufnahmeindex-Differenz ($\Delta a$) niedrigeren Aufnahmeindex (a; $a_1$, ..., $a_{12}$) gesucht wird, wobei insbesondere vorgesehen ist, dass die vorgegeben Aufnahmeindex-Differenz ($\Delta a$) ein Vielfaches der Anzahl an Beleuchtungs-Konfigurationen ist.

6. Verfahren nach einem der Ansprüche 2-4, wobei die Konfidenzen zwischen den benachbarten Einträgen (4b) der jeweils ausgewählten Aufnahme ($F_5$) und den entsprechenden benachbarten Einträgen (4a, 4c) der jeweils aufgefundenen vorhergehenden Aufnahme ($F_1$) und/oder nachfolgenden Aufnahme ($F_9$) mittels Kreuzkorrelation berechnet werden.

**7.** Verfahren nach einem der vorangehenden Ansprüche, wobei der Transport entlang des Pfads (T) einem geradlinigen Transport entlang einer Transportrichtung entspricht, wobei insbesondere vorgesehen ist, dass zumindest eine erste Beleuchtungseinheit (3a) und eine zweite Beleuchtungseinheit (3c) vorgesehen sind, wobei die Beleuchtungseinheiten (3a, 3c) normal zur Transportrichtung und parallel zur Transportebene ausgerichtet sind.

**8.** Verfahren nach einem der vorangehenden Ansprüche, wobei der Transport entlang des Pfads (T) einem mäandrierenden Transport über eine vorgegebene ebene Fläche entspricht.

**9.** Verfahren nach einem der vorangehenden Ansprüche, wobei der Transport entlang des Pfads (T) einem Transport über eine gekrümmte Fläche, insbesondere über eine starre 2-parametrige Fläche, im Raum entspricht.

**10.** Verfahren nach einem der Ansprüche 2-4 oder 6, wobei die Gegenstands-Datenstrukturen (5), insbesondere gemeinsam mit den Gegenstands-Konfidenz-Datenstrukturen, der zumindest einen Beleuchtungs-Konfiguration, insbesondere ausgewählter, vorzugsweise aller Beleuchtungs-Konfigurationen, gemeinsam für eine dreidimensionale Rekonstruktion des aufgenommenen Gegenstands (1) herangezogen werden, wobei insbesondere vorgesehen ist, dass die Konfidenzen der bei der dreidimensionalen Rekonstruktion ermittelten Tiefen der einzelnen Gegenstandsbereiche des Gegenstands (1) angegeben werden.

**Claims**

**1.** Computer-implemented method for creating multi-dimensional object data structures (5) for reconstructing the geometric structure, in particular the surface, of a recorded object (1),

- wherein the object (1) and an image recording unit (2) are moved relative to one another along a path (T) such that the object (1) can be detected in the recording region of the image recording unit (2),
- wherein the image recording unit (2) comprises an area sensor, wherein the area sensor has a plurality of sensor pixels arranged in rows and columns,
- wherein the object (1) is illuminated during detection by at least one illumination unit (3; 3a, ..., 3d) with at least one illumination configuration,
- wherein the at least one illumination unit (3; 3a, ..., 3d) of the respective illumination configuration, with which in particular an associated light field is recorded in each case, always has the same position and orientation relative to the image recording unit (2) when the object (1) is illuminated with the respective illumination configuration,
- wherein a sequence of images ($F_1$, ..., $F_{12}$) is created by the image recording unit (2),

- wherein the individual images ($F_1$, ..., $F_{12}$) are area images of the object (1) comprising selected, in particular all, sensor pixels,
- wherein the recording times for the images ($F_1$, ..., $F_{12}$) are selected such that the object (1) is illuminated with the at least one illumination configuration in images ($F_1$,..., $F_{12}$) of the sequence which are created successively in time, and
- wherein the individual pixels of the images ($F_1$, ..., $F_{12}$) comprise at least one brightness value for the individual object points in the recording region of the image recording unit (2) for each of the predetermined recording times,

- wherein an image stack data structure (BD) is created based on the sequence of images ($F_1$,..., $F_{12}$) of the object (1),

- wherein the individual entries (E, G) of the image stack data structure (BD) are associated with the individual pixels of the images ($F_1$, ..., $F_{12}$) of the sequence, wherein it is provided in particular that the individual entries (E, G) of the image stack data structure (BD) are each associated with an illumination configuration, and
- wherein all entries (E, G) associated with the same image (F) have the same image index (a; $a_1$,..., $a_{12}$), wherein the image index (a; $a_1$,..., $a_{12}$) identifies the position of the respective image in the sequence of images ($F_1$, $F_{12}$) with which the respective entry (E, G) is associated,

- wherein for a predetermined number (k) of neighbourhoods (4; 4a, 4b, 4c) with different neighbourhood sizes of adjacent entries which are associated with the same image ($F_1$, ..., $F_{12}$), adjacent entries of the same neighbourhood size with a number of, in particular at least two, images (F) are searched for,

- whose image indices (a; $a_1$, ..., $a_{12}$) are different from the image index (a5) of the selected entry (E(z,s)) and
- which show the same object region,
such that the respectively considered neighbourhood (4b) of adjacent entries
- is each associated with adjacent entries (4c) of at least one subsequent image ($F_9$) having a higher image index ($a_9$) and/or
- adjacent entries (4a) are each associated with a preceding image ($F_1$) having a lower image index ($a_1$),

- wherein the following is calculated in each case for selected image indices ($a_5$) and selected image index differences ($\Delta a$) for the predetermined number (k) of different neighbourhood sizes of adjacent entries (4b) of a respectively selected image ($F_5$):

- a neighbourhood forward disparity value ($d_v^k$) indicating the disparity between the adjacent entries (4b) of the image ($F_5$) selected in each case and the corresponding adjacent entries (4c) of the subsequent image ($F_9$) found in each case and/or
- a neighbourhood backward disparity value ($d_r^k$) indicating the disparity between the adjacent entries (4b) of the image ($F_5$) selected in each case and the corresponding adjacent entries (4a) of the previous image ($F_1$) found in each case,

- wherein for selected image indices ($a_5$) and selected image index differences ($\Delta a$) for the predetermined number (k) of different neighbourhood sizes of adjacent entries (4b) of a respectively selected image ($F_5$), the individual neighbourhood forward disparity values ($d_v^k$) created in this way and/or the individual neighbourhood backward disparity values ($d_r^k$) created in this way for the individual neighbourhood sizes, are aggregated to form a single forward disparity value ($d_v$) and/or a single backward disparity value ($d_r$) of the respectively selected entry (E(z,s)), in particular by averaging, such that for the selected entries (E(z,s)) of each selected image ($F_5$), a forward disparity value ($d_v$) and/or backward disparity value ($d_r$) aggregated over all neighbourhood sizes is provided for the respective image index ($a_5$) and the respective image index difference ($\Delta a$),
- wherein for selected, in particular all, entries (E, G) of the image stack data structure (BD), the forward disparity value ($d_v$) for a respective image index (a; $a_1$, ..., $a_{12}$) is individually aggregated with the backward disparity value ($d_r$) of the forward entry found in each case, in particular by averaging, and a disparity value (d) is created in this way for the respective entry (E, G), and
- wherein for the disparity values (d) determined in this way, an object data structure (5), in particular a tensor, is created for the recorded object (1) on the basis of the disparity values (d) of the entries (E, G) of the image stack data structure (BD) of selected, in particular all, image indices (a; $a_1$,..., $a_{12}$),

- wherein the respective object data structure (5) has a number of basic entries (7; 7a, ..., 7d), wherein each basic entry (7; 7a, ..., 7d) corresponds to a part, in particular the surface, of the recorded object (1),
- wherein each basic entry (7; 7a, ..., 7d) of the object data structure (5) is associated with an object region of the recorded object (1),
- wherein the individual disparity values (d) of the entries (E, G) of the image stack data structure (BD) are associated with the basic entries (7; 7a,..., 7d) of the object data structure (5) by way of their respectively associated image index (a; $a_1$,..., a $a_{12}$), and
- wherein the disparity values (d) of selected, preferably all, entries (E, G) of those images ($F_1$, ..., $F_{12}$) of the image stack data structure (BD) which show the respective object region are aggregated, in particular by averaging, such that at least one disparity value (d) is associated with each basic entry (7; 7a, ..., 7d) of the object data structure (5).

2. Method according to claim 1,

- wherein the following is additionally calculated in each case for selected image indices ($a_5$) and selected image index differences ($\Delta a$) for the predetermined number (k) of different neighbourhood sizes of adjacent entries (4b) of a respectively selected image ($F_5$):

- a neighbourhood forward confidence value ($e_v^k$) indicating the confidence of the neighbourhood forward disparity value ($d_v^k$) calculated between the adjacent entries (4b) of the respectively selected image ($F_5$) and the corresponding adjacent entries (4c) of the respectively found subsequent image ($F_9$) and/or

- a neighbourhood backward confidence value ($e_r^k$) indicating the confidence of the neighbourhood backward disparity value ($d_r^k$) calculated between the adjacent entries (4b) of the respectively selected image ($F_5$) and the corresponding adjacent entries (4a) of the respectively found preceding image ($F_1$), wherein the confidence is a scalar value for each entry and each neighbourhood size for the respective image index difference ($\triangle a$),

- wherein for selected image indices ($d_5$) and selected image index differences ($\triangle a$) for the predetermined number (k) of different neighbourhood sizes of adjacent entries (4b) of a respectively selected image ($F_5$), the individual neighbourhood forward confidence values ($e_v^k$) created in this way and/or the individual neighbourhood backward confidence values ($e_r^k$) created in this way for the individual neighbourhood sizes, are aggregated to form a single forward confidence value ($e_v$) and/or a single backward confidence value ($e_r$) of the respectively selected entry (E(z,s)), in particular by averaging, such that for the selected entries (E(z,s)) of each selected image ($F_5$), a forward confidence value ($e_v$) and/or backward confidence value ($e_r$) aggregated over all neighbourhood sizes is provided for the respective image index ($a_5$) and the respective image index difference ($\triangle a$),
- wherein for selected, in particular all, entries (E, G) of the image stack data structure (BD), the forward confidence value (ev) for a respective image index (a; $a_1$, ..., $a_{12}$) is individually aggregated with the backward confidence value (e) of the forward entry found in each case, in particular by averaging, and a confidence value (e) is created in this way for the respective entry (E, G), and
- wherein for the confidence values (e) determined in this way, an object confidence data structure, in particular a tensor, is created for the recorded object on the basis of the confidence values (e) of the entries (E, G) of the image stack data structure (BD) of selected, in particular all, image indices (a; $a_1$, ..., $a_{12}$), wherein the composition of the object confidence data structure corresponds to the composition of the object data structure (5),
- wherein the individual confidence values (e) of the entries (E, G) of the image stack data structure (BD) are associated with the basic entries of the object confidence data structure by way of the respectively associated image index (a; $a_1$, ..., $a_{12}$), and - wherein the confidence values (e) of selected, preferably all, entries (E, G) of those images ($F_1$, ..., $F_{12}$) of the image stack data structure (BD) which show the respective object region are aggregated, in particular by averaging, such that at least one confidence value (e) is associated with each basic entry of the object confidence data structure.

3. Method according to claim 2

- wherein the object (1) is illuminated during detection by the at least one illumination unit (3; 3a, ..., 3d) alternately with at least two different illumination configurations, in particular from at least two different illumination directions (C; $C_1$,..., $C_4$),
- wherein the recording times for the images ($F_1$, ..., $F_{12}$) are selected such that in images ($F_1$,..., $F_{12}$) of the sequence which are created successively in time, the object (1) is illuminated alternately with the different illumination configurations,
- wherein the individual entries (E, G) of the image stack data structure (BD) are each associated with one of the illumination configurations,
- wherein adjacent entries of the same neighbourhood size with a number of, in particular at least two, images (F) are searched for which were created with the same illumination configuration and
- wherein for the determined disparity values (d) and/or for the determined confidence values (e) for each illumination configuration, an object data structure (5a,..., 5d) and/or an object confidence data structure is created individually in each case, and/or
- the object data structure (5) and/or the object confidence data structure comprises basic entries (7a, ..., 7d) for each of the illumination configurations, wherein the individual basic entries (7a, ..., 7d) of the respective illumination configuration are associated in aggregated form with the disparity values (d) and/or the confidence values (e) of selected, preferably all, entries (E, G) of those images ($F_1$, ..., $F_{12}$) of the image stack data structure (BD) which show the respective object region and were created with the same illumination configuration, in particular by averaging.

4. Method according to claim 2 or 3,

- wherein, for selected entries (E, G) of the image stack data structure (BD), it is checked in each case whether, for a respective image index (a; $a_1$,...,$a_{12}$) and for a respective image index difference ($\triangle a$), the forward disparity value ($d_v$) matches the backward disparity value ($d_r$), and
- if there is no match, the forward confidence value ($e_v$) and the backward confidence value ($e_r$) for the respective

entry (E, G) are adjusted, in particular by reducing the respective confidence value.

5. Method according to any one of the preceding claims, wherein in the search for adjacent entries of the same neighbourhood size, a search is made for at least one forward entry having an image index ($a$; $a_1$,..., $a_{12}$) which is a predetermined image index difference ($\Delta a$) higher and at least one backward entry having an image index ($a$; $a_1$, ..., $a_{12}$) which is a predetermined image index difference ($\Delta a$) lower,
wherein it is provided in particular that the predetermined image index difference ($\Delta a$) is a multiple of the number of illumination configurations.

6. Method according to any one of claims 2-4,
wherein the confidences between the adjacent entries (4b) of the respectively selected image ($F_5$) and the corresponding adjacent entries (4a, 4c) of the respectively found preceding image ($F_1$) and/or subsequent image ($F_9$) are calculated by means of cross-correlation.

7. Method according to any one of the preceding claims, wherein transport along the path (T) corresponds to rectilinear transport in a transport direction,
wherein it is provided in particular that at least a first illumination unit (3a) and a second illumination unit (3c) are provided, wherein the illumination units (3a, 3c) are aligned so as to be normal relative to the transport direction and parallel to the transport plane.

8. Method according to any one of the preceding claims, wherein transport along the path (T) corresponds to meandering transport over a predetermined flat surface.

9. Method according to any one of the preceding claims, wherein transport along the path (T) corresponds to transport over a curved surface, in particular over a rigid 2-parameter surface, in space.

10. Method according to any one of claims 2-4 or 6, wherein the object data structures (5), in particular together with the object confidence data structures, of the at least one illumination configuration, in particular selected, preferably all illumination configurations, are jointly used for a three-dimensional reconstruction of the recorded object (1),
wherein it is provided in particular that the confidences of the depths of the individual object regions of the object (1), which depths are determined in the three-dimensional reconstruction, are indicated.

**Revendications**

1. Procédé implémenté par ordinateur pour établir des structures de données d'objet multidimensionnelles (5) pour la reconstruction de la structure géométrique, en particulier de la surface, d'un objet enregistré (1),

- dans lequel l'objet (1) et une unité d'enregistrement d'image (2) sont déplacés l'un par rapport à l'autre le long d'une trajectoire (T), de sorte que l'objet (1) peut être détecté dans une zone d'enregistrement de l'unité d'enregistrement d'image (2),
- dans lequel l'unité d'enregistrement d'image (2) comprend un capteur de surface, dans lequel le capteur de surface présente une pluralité de pixels de capteur, qui sont disposés en lignes et en colonnes,
- dans lequel l'objet (1) est éclairé pendant la détection d'au moins une unité d'éclairage (3 ; 3a, ..., 3d) avec au moins une configuration d'éclairage,
- dans lequel l'au moins une unité d'éclairage (3 ; 3a, ..., 3d) de la configuration d'éclairage respective, avec laquelle en particulier respectivement un champ lumineux est associé,
présente toujours la même position et direction par rapport à l'unité d'enregistrement d'image (2), lorsque l'objet (1) est éclairé avec la configuration d'éclairage respective,
- dans lequel une séquence d'enregistrements ($F_1$, ..., $F_{12}$) est établie à partir de l'unité d'enregistrement d'image (2),

- dans lequel les enregistrements ($F_1$, ..., $F_{12}$) individuels sont respectivement des enregistrements de surfaces de l'objet (1) comprenant des pixels de capteurs sélectionnés, en particulier tous,
- dans lequel les instants d'enregistrement des enregistrements ($F_1$, ..., $F_{12}$) sont sélectionnés de telle sorte que dans les enregistrements ($F_1$, ..., $F_{12}$) établis successivement dans le temps la séquence de l'objet (1) est éclairée avec l'au moins une configuration d'éclairage, et
- dans lequel les pixels individuels des enregistrements ($F_1$, ..., $F_{12}$) comprennent pour chacun des instants d'enregistrement prédéfinis au moins une valeur de luminosité pour les points d'objets individuels dans la zone d'enregistrement de l'unité d'enregistrement d'image (2),

- dans lequel une structure de données de pile d'image (BD) est établie en fonction de la séquence d'enregistrements ($F_1$,..., $F_{12}$) de l'objet (1),

- dans lequel les entrées (E, G) individuelles de la structure de données de pile d'image (BD) sont associées aux pixels individuels des enregistrements ($F_1$, ..., $F_{12}$) de la séquence, dans lequel est prévu en particulier que les entrées (E, G) individuelles de la structure de données de pile d'image (BD) sont associées respectivement à une configuration d'éclairage, et
- dans lequel toutes les entrées (E, G), qui sont associées au même enregistrement (F), présentent le même index d'enregistrement (a ; $a_1$,..., $a_{12}$), dans lequel l'index d'enregistrement (a ; $a_1$,..., $a_{12}$) caractérise la position de l'enregistrement respectif dans la séquence des enregistrements ($F_1$, $F_{12}$), qui est associé à l'entrée (E, G) respective,

- dans lequel pour un nombre (k) prédéfini de voisinages (4 ; 4a, 4b, 4c) de différentes tailles de voisinages d'entrées adjacentes, qui sont associées aux mêmes enregistrements ($F_1$, ..., $F_{12}$), des entrées adjacentes de la même taille de voisinage d'un certain nombre, en particulier au moins deux, d'enregistrements (F) sont recherchées,

- dont les indices d'enregistrement (a ; $a_1$, ..., $a_{12}$) sont différents de l'index d'enregistrement ($a_5$) de l'entrée (E(z,s)) sélectionnée et
- qui montrent la même zone d'objet,
de telle sorte que le voisinage (4b) considéré respectivement d'entrées adjacentes
- respectivement des entrées adjacentes (4c) d'au moins un enregistrement ($F_9$) suivant sont associées à un index d'enregistrement ($a_9$) plus élevé et/ou
- respectivement des entrées adjacentes (4a) d'au moins un enregistrement ($F_1$) précédent sont associées à un index d'enregistrement ($a_1$) plus faible,

- dans lequel pour des indices d'enregistrement ($a_5$) sélectionnés et des différences d'index d'enregistrement ($\Delta a$) sélectionnés pour le nombre (k) prédéfini de différentes tailles de voisinage d'entrées adjacentes (4b) d'un enregistrement ($F_5$) sélectionné respectivement est calculé respectivement ce qui suit :

- une valeur de disparité avant de voisinage ($d_v{}^k$), qui indique la disparité entre les entrées adjacentes (4b) de l'enregistrement ($F_5$) sélectionné respectivement et des entrées adjacentes (4c) correspondantes de l'enregistrement ($F_9$) suivant trouvé respectivement et/ou
- une valeur de disparité arrière de voisinage ($d_r{}^k$), qui indique la disparité entre les entrées adjacentes (4b) de l'enregistrement ($F_5$) sélectionné respectivement et les entrées adjacentes (4a) correspondantes de l'enregistrement ($F_1$) précédent trouvé respectivement,

- dans lequel pour des indices d'enregistrement ($a_5$) sélectionnés et des différences ($\Delta a$) d'index d'enregistrement sélectionnés pour le nombre (k) prédéfini de différentes tailles de voisinage d'entrées adjacentes (4b) d'un enregistrement ($F_5$) sélectionné respectivement, les valeurs de disparité avant de voisinage ($d_v{}^k$) individuelles ainsi établies et/ou les valeurs de disparité arrière de voisinage ($d_r{}^k$) individuelles ainsi établies des tailles de voisinage individuelles sont agrégées à une valeur de disparité avant unique ($d_v$) et/ou une valeur de disparité arrière unique ($d_r$) de l'entrée (E(z,s)) sélectionnée respectivement, en particulier par formation de la moyenne,
de sorte que pour les entrées (E(z,s)) sélectionnées de chaque enregistrement ($F_5$) sélectionné, une valeur de disparité avant ($d_v$) et/ou une valeur de disparité arrière ($d_r$) agrégées sur toutes les tailles de voisinage est disponible pour l'index d'enregistrement ($a_5$) respectif et la différence ($\Delta a$) d'index d'enregistrement respectif,
- dans lequel pour des entrées (E, G) sélectionnées, en particulier toutes, de la structure de données de pile d'image (BD) respectivement chacune de la valeur de disparité avant (dv) pour un index d'enregistrement (a ; $a_1$, ..., $a_{12}$) respectif est agrégée avec une valeur de disparité arrière (dr) de l'entrée avant trouvée respectivement, en particulier par formation de la moyenne, et une valeur de disparité (d) est ainsi établie pour l'entrée (E, G) respective, et
- dans lequel pour les valeurs de disparité (d) ainsi déterminées, une structure de données de l'objet (5), en particulier un tenseur, est établie pour l'objet (1) enregistré sur la base des valeurs de disparité (d) des entrées (E, G) de la structure de données de pile d'image (BD) de l'indice d'enregistrement (a ; $a_1$,..., $a_{12}$) sélectionné,

en particulier tous,

- dans lequel la structure de données de l'objet (5) respective présente un certain nombre d'entrées initiales (7 ; 7a, ..., 7d), dans lequel chaque entrée initiale (7 ; 7a, ..., 7d) correspond à une partie, en particulier de la surface, de l'objet (1) enregistré, - dans lequel chaque entrée initiale (7 ; 7a, ..., 7d) de la structure de données de l'objet (5) est associée à une zone d'objet de l'objet (1) enregistré,

- dans lequel les valeurs de disparité (d) individuelles des entrées (E, G) de la structure de données de pile d'image (BD) sont associées par le biais de leurs index d'enregistrement (a ; $a_1$,..., a $a_{12}$) associés respectivement aux entrées initiales (7 ; 7a,..., 7d) de la structure de données de l'objet (5), et

- dans lequel les valeurs de disparité (d) des entrées (E, G) sélectionnées, de préférence toutes, desdits enregistrements ($F_1$, ..., $F_{12}$) de la structure de données de pile d'image (BD), qui montrent la zone d'objet respective, en particulier par formation de la moyenne, sont agrégées de sorte qu'au moins une valeur de disparité (d) est associée à chaque entrée initiale (7 ; 7a, ..., 7d) de la structure de données de l'objet (5).

2.  Procédé selon la revendication 1,

- dans lequel pour des indices d'enregistrement ($a_5$) sélectionnés et des différences ($\Delta a$) d'index d'enregistrement sélectionnés pour le nombre (k) prédéfini de différentes tailles de voisinage d'entrées adjacentes (4b) d'un enregistrement ($F_5$) sélectionné respectivement est calculé en outre respectivement ce qui suit :

- une valeur de confiance avant de voisinage ($e_v{}^k$), qui indique la confiance de la valeur de disparité avant de voisinage ($d_v{}^k$) calculée entre les entrées adjacentes (4b) de l'enregistrement ($F_5$) sélectionné respectivement et les entrées adjacentes (4c) correspondantes de l'enregistrement ($F_9$) suivant trouvé respectivement et/ou

- une valeur de confiance arrière de voisinage ($e_r{}^k$), qui indique la confiance de la valeur de disparité arrière de voisinage ($d_r{}^k$) calculée entre les entrées adjacentes (4b) de l'enregistrement ($F_5$) sélectionné respectivement et les entrées adjacentes (4a) correspondantes de l'enregistrement ($F_1$) précédent trouvé respectivement,

dans lequel la confiance est respectivement une valeur scalaire pour chaque entrée et chaque taille de voisinage pour la différence ($\Delta a$) d'index d'enregistrement respectif,

- dans lequel pour des indices d'enregistrement ($d_5$) sélectionnés et des différences ($\Delta a$) d'index d'enregistrement sélectionné pour le nombre (k) prédéfini de différentes tailles de voisinage d'entrées adjacentes (4b) d'un enregistrement ($F_5$) sélectionné respectivement, les valeurs de confiance avant de voisinage ($e_v{}^k$) individuelles ainsi établies et/ou les valeurs de confiance arrière de voisinage ($e_r{}^k$) individuelles ainsi établies des tailles de voisinage individuelles sont agrégées à une valeur de confiance avant unique ($e_v$) et/ou une valeur de confiance arrière unique ($e_r$) de l'entrée (E(z,s)) sélectionnée respectivement, en particulier par formation de la moyenne, de sorte que pour les entrées (E(z,s)) sélectionnées de chaque enregistrement ($F_5$) sélectionné, une valeur de confiance avant ($e_v$) et/ou une valeur de confiance arrière ($e_r$) agrégée(s) sur toutes les tailles de voisinage est disponible pour l'index d'enregistrement ($a_5$) respectif et la différence ($\Delta a$) d'index d'enregistrement respectif,

- dans lequel pour des entrées (E, G) sélectionnées, en particulier toutes, de la structure de données de pile d'image (BD) individuellement chacune de la valeur de confiance avant ($e_v$) pour un index d'enregistrement (a ; $a_1$, ..., $a_{12}$) respectif est agrégée avec la valeur de confiance arrière (e) de l'entrée avant trouvée respectivement, en particulier par formation de la moyenne, et une valeur de confiance (e) est ainsi établie pour l'entrée (E, G) respective, et

- dans lequel pour les valeurs de confiance (e) ainsi déterminées, une structure de données de confiance de l'objet, en particulier un tenseur, pour l'objet enregistré sur la base des valeurs de confiance (e) des entrées (E, G) de la structure de données de pile d'image (BD) d'indices d'enregistrement (a ; $a_1$, ..., $a_{12}$) sélectionnés, en particulier tous, est établie, dans lequel la construction de la structure de données de confiance de l'objet correspond à la construction de la structure de données de l'objet (5),

- dans lequel les valeurs de confiance (e) individuelles des entrées (E, G) de la structure de données de pile d'image (BD) sont associées par le biais de l'index d'enregistrement (a; $a_1$, ..., $a_{12}$) associé respectivement aux entrées initiales de la structure de données de confiance de l'objet, et - dans lequel les valeurs de confiance (e) des entrées (E, G) sélectionnées, de préférence toutes, desdits enregistrements ($F_1$, ..., $F_{12}$) de la structure de données de pile d'image, qui montrent la zone de l'objet respective, en particulier par formation de la moyenne, sont agrégées de sorte que chaque entrée initiale de la structure de données de confiance de l'objet est associée à au moins une valeur de confiance (e).

**3.** Procédé selon la revendication

- dans lequel l'objet (1) est éclairé pendant la détection de l'au moins une unité d'éclairage (3 ; 3a, ..., 3d) alternativement avec au moins deux configurations d'éclairage différentes, en particulier provenant d'au moins deux directions d'éclairage (C; $C_1$,..., $C_4$) différentes,
- dans lequel les instants d'enregistrement pour les enregistrements ($F_1$, ..., $F_{12}$) sont sélectionnés de telle sorte que dans les enregistrements ($F_1$, ..., $F_{12}$) établis successivement dans le temps, la séquence de l'objet (1) est éclairée alternativement avec les configurations d'éclairage différentes,
- dans lequel les entrées (E, G) individuelles de la structure de données de pile d'image (BD) sont associées respectivement à l'une des configurations d'éclairage,
- dans lequel des entrées adjacentes de la même taille de voisinage d'un certain nombre, en particulier d'au moins deux, d'enregistrements (F) sont recherchées, qui ont été établies avec la même configuration d'éclairage et
- dans lequel pour les valeurs de disparité (d) déterminées et/ou pour les valeurs de confiance (e) déterminées pour chaque configuration d'éclairage respectivement chacune d'une structure de données de l'objet (5a, ..., 5d) et/ou d'une structure de données de confiance de l'objet est établie, et/ou
- la structure de données de l'objet (5) et/ou la structure de données de confiance de l'objet comprend des entrées initiales (7a, ..., 7d) pour chacune des configurations d'éclairage, dans lequel les valeurs de disparité (d) et/ou les valeurs de confiance (e) d'entrées (E, G) sélectionnées, de préférence toutes, desdits enregistrements ($F_1$, ..., $F_{12}$) de la structure de données de pile d'image (BD) sont associées de manière à être agrégées aux entrées initiales (7a, ..., 7d) individuelles de la configuration d'éclairage respective, qui montrent la zone de l'objet respective et qui sont établies avec la même configuration d'éclairage, en particulier par formation de la moyenne.

**4.** Procédé selon la revendication 2 ou 3,

- dans lequel pour des entrées (E, G) sélectionnées de la structure de données de pile d'image (BD) il est vérifié respectivement, si pour un index d'enregistrement (a ; $a_1$, ..., $a_{12}$) respectif et pour une différence ($\triangle$a) d'index d'enregistrement respectif, la valeur de disparité avant ($d_v$) correspond à la valeur de disparité arrière ($d_r$) et
- dans le cas où il n'existe aucune correspondance, la valeur de confiance avant ($e_v$) et la valeur de confiance arrière ($e_r$) sont ajustées pour l'entrée (E, G) respective, en particulier en réduisant la valeur de confiance.

**5.** Procédé selon l'une quelconque des revendications précédentes, dans lequel lors de la recherche d'entrées adjacentes de la même taille de voisinage au moins une entrée avant avec un index d'enregistrement (a ; $a_1$,..., $a_{12}$) plus élevé qu'une différence ($\triangle$a) d'index d'enregistrement prédéfinie et au moins une entrée arrière avec un index d'enregistrement (a ; $a_1$, ..., $a_{12}$) plus faible qu'une différence ($\triangle$a) d'index d'enregistrement prédéfinie est recherchée,
dans lequel est prévu en particulier, que la différence ($\triangle$a) d'index d'enregistrement est un multiple du nombre de configurations d'éclairage.

**6.** Procédé selon l'une quelconque des revendications 2-4,
dans lequel les confiances entre les entrées adjacentes (4b) de l'enregistrement ($F_5$) sélectionné respectivement et des entrées adjacentes (4a, 4c) correspondantes de l'enregistrement ($F_1$) précédent trouvé respectivement et/ou l'enregistrement ($F_9$) suivant sont calculées à l'aide de la corrélation croisée.

**7.** Procédé selon l'une quelconque des revendications précédentes, dans lequel le transport le long de la trajectoire (T) correspond à un transport linéaire le long d'une direction de transport,
dans lequel est prévu en particulier, qu'au moins une première unité d'éclairage (3a) et une seconde unité d'éclairage (3c) sont prévues, dans lequel les unités d'éclairage (3a, 3c) sont orientées perpendiculairement à la direction de transport et parallèlement au plan de transport.

**8.** Procédé selon l'une quelconque des revendications précédentes, dans lequel le transport le long de la trajectoire (T) correspond à un transport sinueux sur une surface plane prédéfinie.

**9.** Procédé selon l'une quelconque des revendications précédentes, dans lequel le transport le long de la trajectoire (T) correspond à un transport sur une surface courbe, en particulier sur une surface rigide à 2 paramètres, dans l'espace.

10. Procédé selon l'une quelconque des revendications 2-4 ou 6, dans lequel les structures de données de l'objet (5), en particulier conjointement avec les structures de données de confiance de l'objet, de l'au moins une configuration d'éclairage, en particulier de configurations d'éclairage sélectionnées, de préférence toutes, sont utilisées conjointement pour une reconstruction tridimensionnelle de l'objet (1) enregistré,

dans lequel est prévu en particulier, que les confiances des profondeurs déterminées pour la reconstruction tridimensionnelle des différentes zones d'objet de l'objet (1) sont indiquées.

Fig. 1

Fig. 2

$F_1$  $F_2$  $F_3$  $F_4$
$F_5$  $F_6$  $F_7$  $F_8$
$F_9$  $F_{10}$  $F_{11}$  $F_{12}$

4a

g

F$_1$

F$_5$

4b

g

4c

F$_9$

5a

6a

Fig. 3

Fig. 4

Fig. 6

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3561772 A1

**In der Beschreibung aufgeführte Nicht-Patentliteratur**

- **SZELISKI, RICHARD.** Computer Vision: Algorithms and Applications. Springer Science & Business Media, 2010
- Lf-fusion: Dense and accurate 3D reconstruction from light field images. **PENG, J. ; XIONG, Z. ; ZHANG, Y. ; LIU, D. ; WU, F.** 2017 IEEE Visual Communications and Image Processing (VCIP). IEEE, Dezember 2017, 1-4
- KinectFusion: Real-time dense surface mapping and tracking. **NEWCOMBE, R. A. ; IZADI, S. ; HILLIGES, O. ; MOLYNEAUX, D. ; KIM, D. ; DAVISON, A. J. ; FITZGIBBON, A. ; 2011, OCTOBER.** 2011 10th IEEE International Symposium on Mixed and Augmented Reality. IEEE, 127-136
- **SCHILLING, H. ; DIEBOLD, M. ; ROTHER, C. ; JÄHNE, B.** Trust your model: Light field depth estimation with inline occlusion handling. *Proceedings of the IEEE Conference on Computer Vision and Pattern Recognition,* 2018, 4530-4538
- **SABZEVARI, REZA ; ALESSIO DEL BUE ; VITTORIO MURINO.** Combining Structure from Motion and Photometric Stereo: A Piecewise Formulation. *Eurographics (Posters),* 2012